# EUROPEAN PATENT SPECIFICATION

(11) **EP 1 873 631 B1**
(45) Date of publication and mention of the grant of the patent: **11.08.2010**
(21) Application number: 06116082.6
(22) Date of filing: 26.06.2006
(51) Int. Cl.: G06F 9/44

(54) **Method and system for generating a reverse binary patch**
Verfahren und System zur Erzeugung einer umgekehrten Binärkorrektur
Procédé et système de génération de pièce binaire inversée

(43) Date of publication of application: 02.01.2008
(73) Proprietor: RESEARCH IN MOTION LIMITED, Waterloo, Ontario N2L 3W8 (CA)
(72) Inventor: Scian, Anthony F., Waterloo Ontario N2T 2N6 (CA); Dahms, John F.A., Waterloo Ontario N2K 2N1 (CA)
(74) Representative: Patel, Binesh

(56) References cited:
- US-A- 6 161 218
- US-A1- 2002 034 105

## Description

The present application relates to software patches and, more particularly, to a method and system for generating a reverse patch for undoing a software update.

A common practice in the computer software industry is to update binary code by way of a patch. Application of a patch to existing binary code results in updated binary code. In its simplest form, a patch is a set of commands for creating the updated binary code using the existing binary code. For example, the patch may include a set of copy and insert commands. A copy command includes a reference to a section of the existing binary code that matches a section of the updated binary code. The copy command is useful when a portion of the updated binary code can be obtained from the existing binary code. An insert command provides data to be inserted in the updated binary code. The insert command is used to create portions of the updated binary code that cannot be found in the existing binary code.

In practice, the "copy" command in a patch rarely involves copying an exact portion of the existing binary code for inclusion in the updated binary code. Usually, the "copied" portion of the existing binary code is similar, but not exactly the same, as the desired portion of updated binary code. Accordingly, the patch may also include an associated difference file. The copy command is used to indicate that a portion of the updated binary code is *similar* to the existing binary code, and the associated difference file contains the byte-wise differences. Each copy command may specify an offset in the existing binary code and a length. The specified portion of the existing binary code is read and added to the same number of bytes from the associated difference file to create the desired portion of the updated binary code.

The creation of a patch is typically a two-step process. The first step is to identify the similar regions between a new binary image and an old binary image. This is an indexing step that involves searching through the two images to find regions that are the same or substantially similar. In some cases this indexing operation may be based upon hashing or suffix sorting. These types of operations are very computationally intensive. The indexing operation results in an index file that contains pointers or other information defining the regions of substantial similarity between the new image and the old image. In some instances the index file may be referred to as a similar regions map.

After the indexing operation, a patch generation operation constructs the patch by generating "copy" and "insert" commands based upon the new image, the old image and the similar regions map (*i.e.* the index file). The result of the patch generation operation is the patch file.

In some instances, it may be desirable to "undo" or rollback a patch, so as to recover the old binary image. One method of doing this is to save a copy of the old image in memory; however, this is impractical on memory-scarce devices, like mobile handheld devices. Another method of undoing a patch is to distribute the patch along with a reverse patch, which can be used by the device to recover the old image from the new image. However, the reverse patch may be a large file which makes the downloading of both the forward patch and the reverse patch a time consuming and possibly expensive operation. A third method is to have the device generate the reverse patch when it applies the forward patch, so as to be able to undo the changes; however, computing a patch is a computationally intensive operation which the device may be unable to practically accomplish given its limited memory and processing power.

US2002/034105 describes a method of generating a forward patch which deals with the problem of cyclic dependencies in the case of an incremental forward patch in which sectors of the old binary image are overwritten with sectors of the new binary image as the patch is applied.

It would be advantageous to provide a new method and system for generating a reverse patch.

The present application describes and discloses methods, systems, and machine-readable mediums for generating a reverse patch.

In a first aspect, the present application preferably provides a method of providing a reverse index file for generating a reverse patch for reversing a forward patch on an electronic device, wherein the forward patch generates a new binary image from an old binary image, the method comprising the steps of: generating the reverse index file at a server, the reverse index file identifying regions of similarity between the old binary image and the new binary image for use in obtaining at least a portion of the old binary image from the new binary image; and transmitting the forward patch and the reverse index file from the server to the electronic device.

In another aspect, the present application preferably provides a method of generating a reverse patch, including the steps of the first aspect of the invention, and further comprising: applying the forward patch to the old binary image to create the new binary image at the electronic device; and generating the reverse patch from the new binary image, the old binary image, and the reverse index file at the electronic device.

In yet another aspect, the present application preferably provides a method at an electronic device of generating a reverse patch for reversing a forward patch, wherein the forward patch generates a new binary image from an old binary image, the method comprising the steps of: receiving the forward patch and a reverse index file from a server, the reverse index file identifying regions of similarity between the old binary image and the new binary image for use in obtaining at least a portion of the old binary image from the new binary image; applying the forward patch to the old binary image to create the new binary image; and generating the reverse patch from the new binary image, the old binary image, and the reverse index file.

In a further aspect, the present application preferably provides a system for providing a reverse index file for generating a reverse patch for reversing a forward patch, wherein the forward patch generates a new binary image from an old binary image, the system comprising: a server having a processor and memory for storing the new binary image and the old binary image, and for storing the forward patch, and having an indexing module executable by the processor for generating a reverse index file, the reverse index file identifying regions of similarity between the old binary image and the new binary image for use in obtaining at least a portion of the old binary image from the new binary image, the server comprising a communications interface for transmitting the forward patch and the reverse index file from the server to an electronic device. The electronic device includes a device processor and device memory for storing the forward patch and the reverse index file received from the server via one or more communications networks. The electronic device includes a patch manager for applying the forward patch to the old binary image to create the new binary image, and includes a patch generation module for generating the reverse patch from the new binary image, the old binary image, and the reverse index file.

In yet a further aspect, the present application preferably provides an electronic device for generating a reverse patch for reversing a forward patch, wherein the forward patch generates a new binary image from an old binary image, the electronic device comprising: a device processor; a communications subsystem for receiving the forward patch and the reverse index file from a server (70) via one or more communications networks; device memory for storing the forward patch and the reverse index file; a patch manager for applying the forward patch to the old binary image to create the new binary image; a patch generation module for generating the reverse patch from the new binary image, the old binary image, and the reverse index file.

In yet another aspect, the present application preferably provides machine- machine-readable medium embodying program code executable by a processor of a computing device for causing said computing device to implement any of the methods described herein.

Other aspects and features of the present application will be appreciated by those of ordinary skill in the art from a review of the following detailed description in conjunction with the figures.

### BRIEF DESCRIPTION OF THE DRAWINGS

Reference will now be made, by way of example, to the accompanying drawings which show example embodiments of the present application, and in which:

Figure 1 shows a block diagram of a known method of producing a patch for generating a new binary image from an old binary image;

Figure 2 shows a block diagram of a method of producing a reverse patch for generating the old binary image from the new binary image;

Figure 3 shows, in block diagram form, a host and a mobile electronic device for generating the reverse patch;

Figure 4 diagrammatically shows the old binary image and the new binary image;

Figures 5A - 5D illustrate, in block diagram form, the generation of an incremental patch;

Figure 6 shows, in flowchart form, a method for generating an incremental patch for updating an old binary image to a new binary image;

Figure 7 shows, in flowchart form, another method of generating an incremental patch for updating an old binary image to a new binary image;

Figure 8 shows, in flowchart form, a method of incrementally patching a binary image;

Figures 9A and 9B diagrammatically show the generation of incremental reverse index files for an incremental reverse patch;

Figure 10 diagrammatically shows the generation of an incremental reverse patch during application of an incremental patch at a client device;

Figure 11 shows, in flowchart form, an embodiment of a method for generating reverse index files for creating a reverse patch; and

Figure 12 shows, in flowchart form, a method of generating an incremental reverse patch on a client device.

Similar reference numerals may have been used in different figures to denote similar components.

### DESCRIPTION OF PREFERRED EMBODIMENTS

Embodiments of the present application are not limited to any particular operating system, mobile device architecture, server architecture, or computer programming language.

References in the present application to "blocks" or "sectors" of an image or of memory are intended to refer to portions or blocks of memory space having a predefined size. In the case of flash memory, or other similar types of writable memory, a block or sector refers to that sub-portion of the memory that can be written at one time.

While the present application describes embodiments that are of use in patching code resident in flash memory, the present application is not limited to patching binary data in flash memory and may be implemented in connection with other types of memory. It will also be understood that, although the present application provides some examples of methods for choosing the permutation of sectors to use in generating the incremental patches, the present application is not limited to these methods.

### Patching binary images

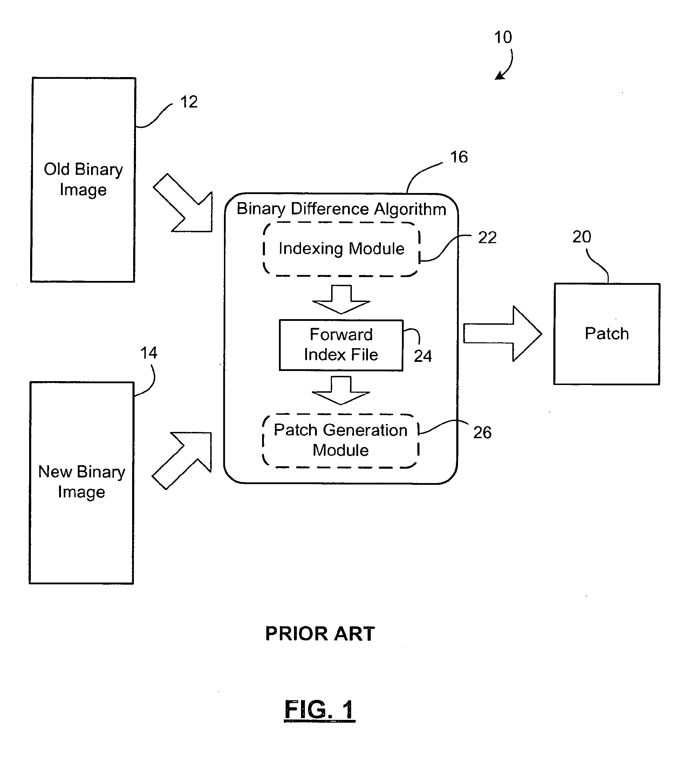

Reference is first made to Figure 1, which shows a block diagram of a known method 10 of producing a patch for generating a new binary image 14 from an old binary image 12. This patch will be referred to as a forward patch 20, since it is used to obtain the new binary image 14 from the old binary image 14. A binary difference algorithm 16 is used to produce the forward patch 20 based upon the old binary image 12. The forward patch 20 is a difference file that describes how to obtain the new binary image 14 from the old binary image 12. The difference file may reference portions of the old binary image 12 for inclusion in the new binary image 14. It may also include new binary data for inclusion in the new binary image 14, where corresponding data cannot be efficiently referenced from the old binary image 14. In some embodiments, the forward patch 20 may include a set of copy and insert commands, wherein the copy commands reference portions of the old binary image to be copied into the new binary image, and the insert commands contain new data for insertion into the new binary image.

Updating binary images, and in particular executable software code, using a patch is a well-known technique in the computer programming industry. A variety of binary difference algorithms exist and would be well known to those of ordinary skill in that art.

As depicted in Figure 1, the binary difference algorithm 16 may include an indexing module 22 for comparing the old binary image 12 to the new binary image 14 and identifying regions of similarity. The indexing module 22 may employ hashing, suffix sorting, or any other method of identifying regions of similarity between the old binary image 12 and the new binary image 14. Suitable algorithms or modules for identifying regions of substantial similarity will be appreciated by those of ordinary skill in the art.

The indexing module 22 produces a forward index file 24, which contains data identifying the regions of similarity. In some instances, the forward index file 24 may be referred to as a similar regions map. The forward index file 24 specifies the regions of similarity between the old binary image 12 and the new binary image 14. It may contain offsets or pointers to locations within each image 12 and 14 and lengths of the regions of similarity at those locations.

The forward index file 24 is used, in conjunction with the old binary image 12 and the new binary image 14, by a patch generation module 26 to generate the forward patch 20. The patch generation module 26 creates the copy and insert commands that make up a control file or control region of the forward patch 20. The patch generation module 26 relies upon the forward index file 24 to locate the regions of similarity for generating the copy commands and the associated bytewise difference files.

Once the forward patch 20 has been generated then it may be distributed for use in updating old binary code. In one example, the forward patch 20 is distributed over wired and wireless networks to mobile electronic devices for use in updating the old binary image 12 resident on each of the mobile electronic devices. Each device receives the forward patch 20 and uses it to generate the new binary image 14.

### Reverse Patches

At times, a device user may wish to undo or roll-back a patch operation. In other words, the user may wish to recover the old binary image 12. In this situation, a reverse binary patch may be used to generate the old binary image 12 from the new binary image 14, thereby undoing the effect of the forward patch 20.

The conventional method of generating and distributing a reverse patch is to create the reverse patch at the same time as the forward patch 20 is generated. The forward patch 20 and reverse patch are then distributed together. As outlined above, transmitting both patches from a host server to a remote client device, especially a wireless device, may be time consuming and costly in terms of bandwidth.

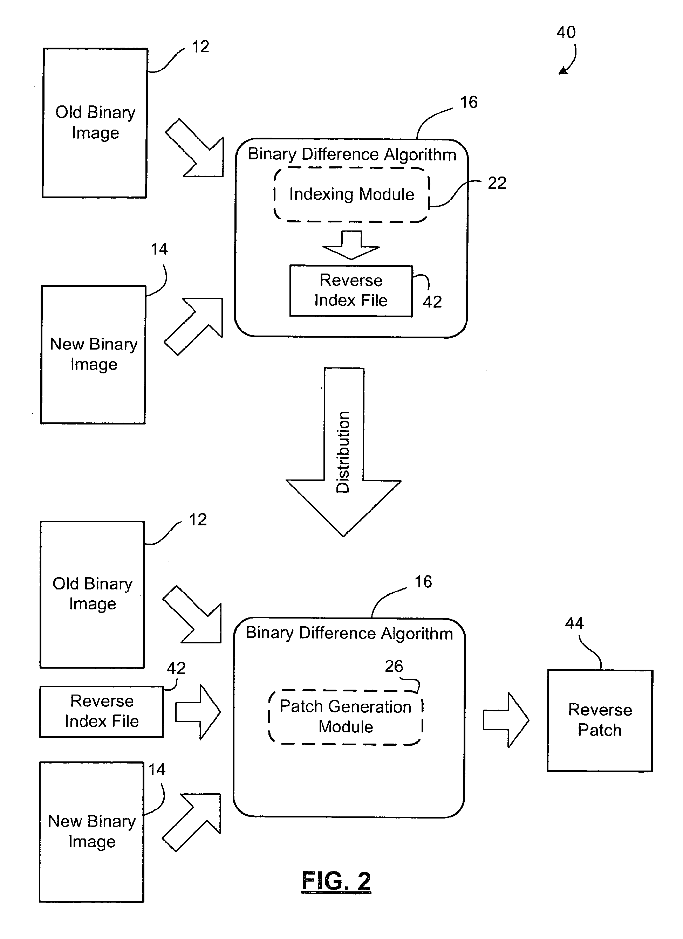

Reference is now made to Figure 2, which shows a block diagram of a method 40 of producing a reverse patch 44 for generating the old binary image 12 from the new binary image 14. The method 40 begins by using the binary difference algorithm 16 and, in particular, the indexing module 22 to generate a reverse index file 42. Just like the forward index file 24 used in creating the forward patch 20 (Fig. 1), the reverse index file 42 specifies the regions of similarity between the new binary image 14 and the old binary image 12. It may contain offsets or pointers to locations within each image 12 and 14 and lengths of the regions of similarity at those locations. The reverse index file 42 details the regions of the new binary image 14 that are substantially similar to regions within the old binary image 12. In some embodiments, the reverse index file 42 may identify the same similar regions as the forward index file 24, but not necessarily.

The reverse index file 42 is relatively small compared to either the forward patch 20 or the reverse patch 44, since each patch 20, 44 contains data to be inserted into the image it creates. Accordingly, the method 40 includes a step of distributing the reverse index file 42 from the server or host device that created the reverse index file 42 to one or more client devices. In particular, the method 40 includes distributing the reverse index file 42 together with the forward patch 20.

At the client device, application of the forward patch 20 will mean that the device has both the old binary image 12 and the new binary image 14 available to it. The device may therefore finish applying the binary difference algorithm 16 to create the reverse patch 44. In particular, the device employs the patch generation module 26 with the old binary image 12, the new binary image 14, and the reverse index file 42 as inputs to generate the reverse patch 44. The device may then store the reverse patch 44 for later use if it becomes necessary to roll back the patch to recover the old binary image 12.

By distributing the reverse index file 42 instead of the reverse patch 44, the method 40 allows for a faster more efficient download to the device. The method 40 also avoids burdening the device with the computationally intensive task of generating the reverse index file 42 using an indexing operation. Once it has been provided with the reverse index file 42, the device need only perform the patch generation process, which is less computationally demanding.

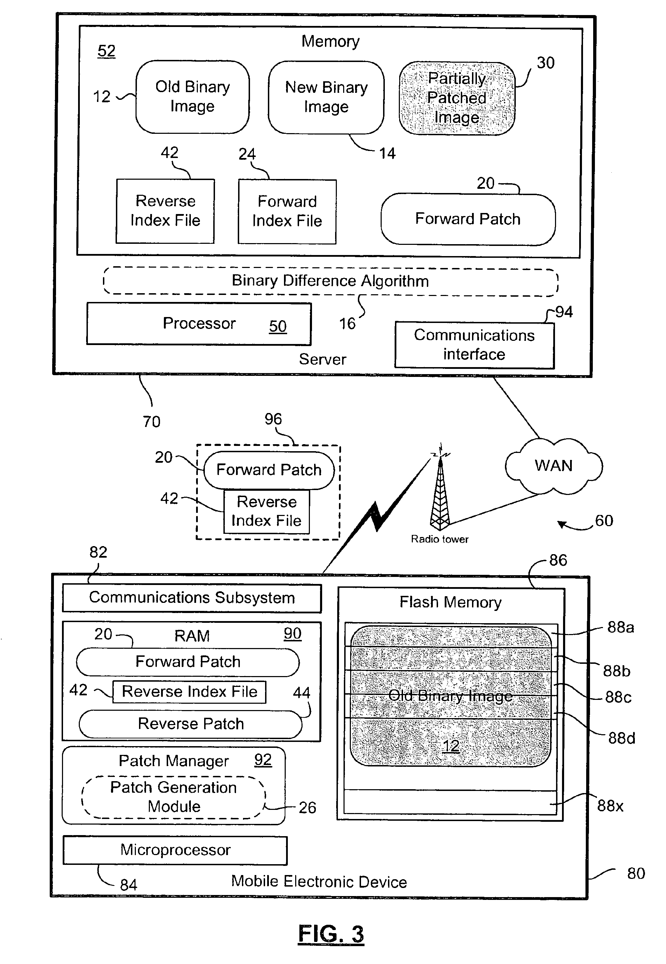

Reference is now made to Figure 3, which shows, in block diagram form, a host 70 and a mobile electronic device 80 for generating the reverse patch 44.

The host 70 may include a processor 50 and memory 52. The host 70 may, in some embodiments, include a server or gateway or other remote computing device. The memory 52 may store a copy of the old binary image 12 and the new binary image 14. The host 70 includes a binary difference algorithm 16 for generating the forward patch 20. The binary difference algorithm 16 may include the indexing module 22 (Fig. 1) and patch generation module 26 (Fig. 1) as described above in connection with Figure 1. In some embodiments in which the forward patch 20 is an incremental patch, the memory 52 may further store a partially patched image 30 used by the binary difference algorithm 16 in the course of generating the forward patch 20. The concepts of incremental patching and the partially patched image 30 are explained further below.

In the course of generating the forward patch 20, the indexing module 22 (Fig. 1) of the binary difference algorithm 16 generates the forward index file 24, which is shown as being stored in the memory 52. The host 70 also uses the indexing module 22 to generate the reverse index file 42, which identifies regions of substantial similarity between the old binary file 12 and the new binary file 14.

The host 70 may include a number of other components, both of software and hardware, including an operating system and user interface, as will be appreciated by persons of ordinary skill in the art. The host 70 includes a communications interface 94 to enable the host 70 to send or receive data with remote computers or devices over one or more communications network. The communications interface 94 implements network and communications protocols and may, in one embodiment, package and packetize data payloads for transmission in accordance with a predefined packet communications protocol.

In one embodiment, the host 70 packages the forward patch 20 and the reverse index file 24 together as a deliverable 96. The deliverable 96 may comprise the payload of a packetized message formatted in accordance with a predefined communications protocol, having suitable header or envelope information. The deliverable 96 may be distributed by the host 70 to a plurality of remote devices through one or more communications networks.

The mobile electronic device 80 may include a microprocessor 84, flash memory 86, RAM 90, and a communications subsystem 82. The communications subsystem 82, operating under program control executed by the microprocessor 84, may provide the device 80 with wireless connectivity using known wireless protocols. The communications subsystem 82 may allow the device 80 to communicate with servers and other devices over a wireless network 60, and may provide the device 80 with the ability to receive communications from remote servers, such as the host 70. In some embodiments, the host 70 may transmit or forward files, such as the deliverable 96 to the device 80 via the wireless network 60. The wireless network 60 may include a plurality of wireless transceivers networked through a wide area network, and may include connections with a plurality of other networks, both public and private, including the Internet.

The mobile electronic device 80 further includes a patch manager 92. The patch manager 92 includes computer-readable code executable by the microprocessor 84 for updating a binary image using the forward patch 20. The patch manager 92 may, in some embodiments, be provided as a part of the deliverable 96, although for ease of illustration it is shown as being separate in Figure 3. The patch manager 92 may be received by the device 80 from the host 70 via the wireless network 60. In another embodiment, the patch manager 92 may be a resident module on the device 80. In some embodiments, the patch manager 92 may be implemented as a part of the device operating system (not shown). In any case, the patch manager 92 implements the commands of the forward patch 20 for updating the binary image stored in flash memory 86, i.e. for obtaining the new binary image 14 from the old binary image 12.

The patch manager 92 further includes the patch generation module 26 for generating patches based upon input images and index files. Accordingly, the device 80 is capable of generating the reverse patch 44 based upon the old binary image 12 (which is resident on the device), the new binary image 14 (which is created through application of the forward patch 20), and the reverse index file 42.

In one embodiment, the device 80 maintains a copy of the old binary image 12 in RAM memory 90 or flash memory 86 following application of the forward patch 20. Application of the forward patch 20 results in generation of the new binary image 14, which is stored in flash memory 86. Accordingly, the old binary image 12, the new binary image 14, and the reverse index file 42 are all available to the patch generation module 26 for generation of the reverse patch 44.

Once the device 80 has generated the reverse patch 44, it may store the reverse patch 44 in non-volatile memory, such as flash memory 86. The old binary image 12 may then be deleted from memory 90 or 86.

### Incremental Patches

In some cases, patches are used to update a large block of executable code. For example, the patch may be intended to update the executable code resident on a mobile electronic device, such as a personal digital assistant (PDA). One of the conventional methods of using a patch involves creating a backup copy of the old binary image, generating the new binary image by applying the patch to the old binary image, and then replacing the old binary image with the new binary image. It will be appreciated that this process may require a large amount of memory to implement. For example, if the old binary image is 3 MB, then the backup of this image necessitates a further 3 MB, and the generation of the new image necessitates the availability of about 3 MB. In all, 6 - 7 MB of free memory space may be necessary to facilitate use of the patch. This amount of free memory may not be available on a memory-scarce device, like a PDA.

Another issue that arises with respect to patching a binary image stored in flash memory is the fact that flash memory can only be written in defined blocks or sectors of a predetermined size.

US patent no. 6,775,423 to Kulkarni et al, issued August 10, 2004, describes a binary difference algorithm that attempts to create a patch designed to incrementally update an image stored in flash memory a block at a time. Kulkarni et al. recognizes that portions of the patch may rely upon portions of the old image that are written over as the incremental patching is performed, which results in a cyclic dependency. The Kulkami patent attempts to address this problem by proposing that portions of the patch be reorganized in order to eliminate cyclic dependencies.

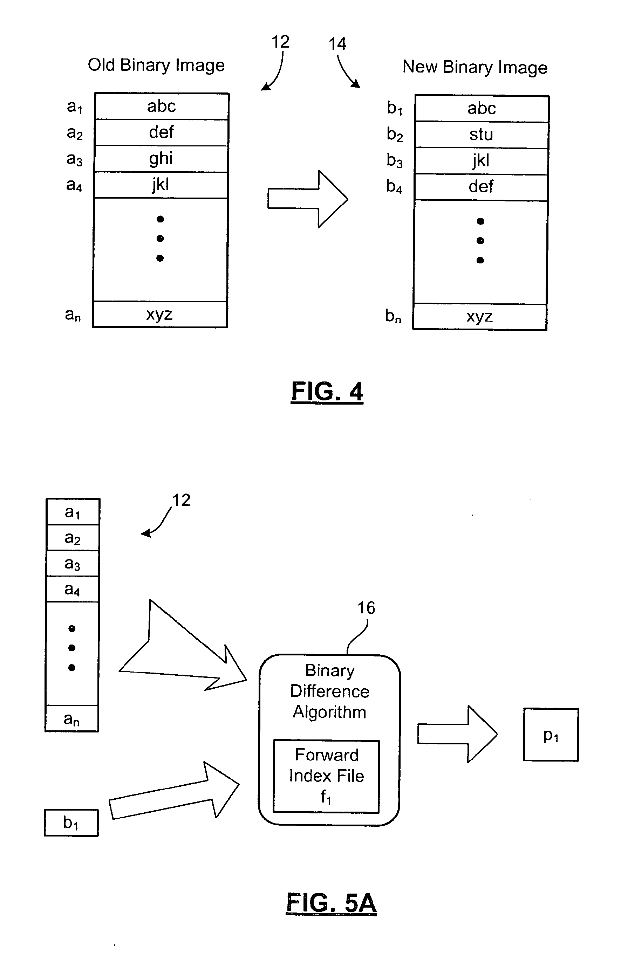

Reference is now made to Figure 4, which diagrammatically shows the old binary image 12 and the new binary image 14. The old binary image 12 is contained in n sectors labeled individually a₁ to an. Sector a₁, for example, contains binary data "abc". The new binary image 14 is contained in n sectors labeled individually b₁ to bₙ. Sector b₁, for example, also contains binary data "abc".

In this embodiment, the old binary image 12 and the new binary image 14 occupy the same n number of sectors; however, in many embodiments the new binary image 14 may occupy more sectors than the old binary image 12. In some embodiments, where the old binary image 12 occupies fewer sectors *(i.e.* m sectors) than the new binary image 14, then the shorter image may be padded with (n - m) uninitialized sectors so that both images have n sectors. Those skilled in the art will appreciate that the padding of the shorter image (with 00's or ff's) will not materially affect the operation of the methods described herein. In cases where the old binary image 12 occupies more sectors than the new binary image 14, the extra sectors will be used as input for the incremental patches but they will not necessarily be patched to form part of the new image. The removal of these extra sectors can be deduced by the patch method once the patching of the new image is finished.

A forward patch for generating the new binary image 14 from the old binary image 12 may contain references to portions of the old binary image 12 and sections of new data. In other words, the forward patch may contain copy commands that reference portions of the old binary image 12 and insert commands for inserting new data. As noted above, a patch operation performed on code stored in flash memory may be executed on a sector-by-sector basis. Referring still to Figure 4 as an example, a forward patch may include a command to create sector b₁ by copying sector a₁ since sector a₁ contains the same data, "abc", as sector b₁. Similarly, the forward patch may include a command to copy sector a₂ in order to create sector b₄, since it contains data "def". Sector b₂ contains new data that cannot be obtained from the old binary image 12, so the forward patch may contain an insert command and the data "stu".

The order in which sector-specific patches are applied can raise a problem. This problem will now be illustrated by way of a simplified example. When patching a binary image in flash memory, especially on a device with limited memory capacity, like a mobile electronic device, the forward patch may be applied by overwriting the memory sectors containing the old binary image 12 with data to create the new binary image 14. Referring to the example shown in Figure 4, when the forward patch is applied in order to update the old binary image 12 the forward patch may begin by writing sector b₁ with data "abc" based on the reference to sector a₁. It may then write sector b₂ with the data "stu". Sector b₃ may then be written with the data "jkl" based on a reference to sector a₄. It will be noted that a cyclic dependency problem may be encountered in attempting to patch sector b₄ since it depends on a reference to sector a₂ in order to obtain the data "def". However, the data in sector a₂ was overwritten with the data "stu" in a previous step in the patch operation. Accordingly, the referenced data in the old binary image 12 is no longer available. The forward patch would therefore need to contain the data "def", which may result in a larger patch.

Reference is now made to Figures 5A - 5D, which illustrate, in block diagram form, the generation of an incremental patch in accordance with an embodiment of the present application. Figure 5A shows the generation of a first patch p₁ using the binary difference algorithm 16. The binary difference algorithm 16 generates the first patch p₁ based upon the old binary image 12 and a first sector b₁ of a new binary image. The first patch p₁ contains the instructions for obtaining b₁ from the old binary image 12. Accordingly, the first patch p₁ may contain copy commands that reference portions of the old binary image 12 and may contain insert commands for inserting new data. It will be appreciated that the application of the binary difference algorithm 16 includes performing an indexing operation to produce a forward index file f₁. The forward index file f₁ is then used together with the old binary image 12 and the first sector b₁ to generate the first patch p₁. The forward index file f₁ identifies regions of similarity between the old binary image 12 and the first sector b₁.

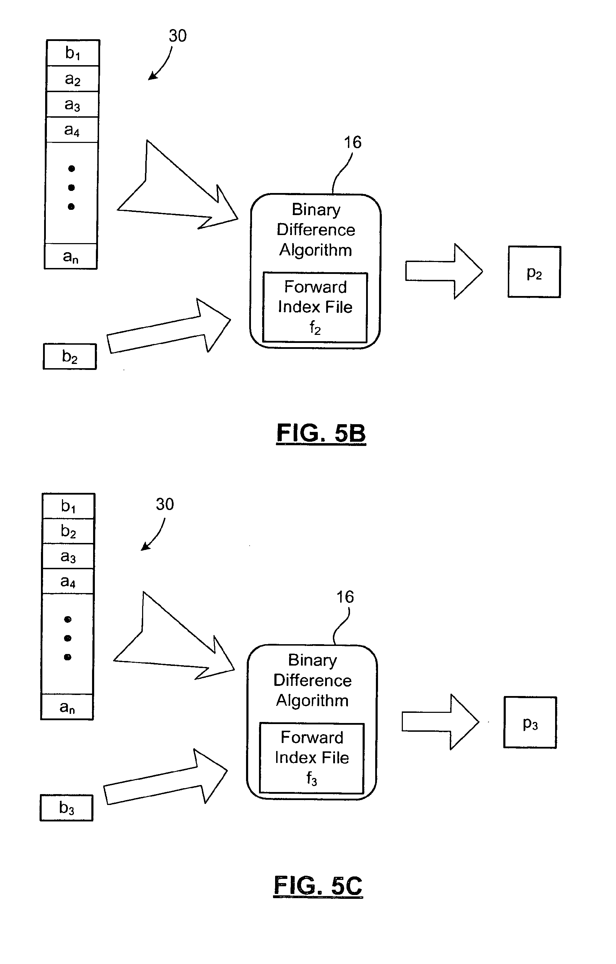

Reference is now made to Figure 5B, which shows the generation of a second patch p₂ using the binary difference algorithm 16. The second patch p₂ is generated based upon a second sector b₂ of the new binary image and a partially patched image 30. The partially patched image 30 is the old binary image 12 with the previously generated patches applied to it, which in this case includes only the first patch p₁. The partially patched image 30 may be referred to as a "current image" or an "intermediate image". The second patch p₂ contains instructions for obtaining the second sector b₂ of the new binary image from the partially patched image 30.

The application of the binary difference algorithm 16 includes an indexing operation to produce forward index file f₂. The forward index file f₂ identifies regions of similarity between the partially patched image 30 and the second sector b₂.

Figure 5C shows the generation of a third patch p₃ using the binary difference algorithm 16. The third patch p₃ contains instructions for obtaining a third sector b₃ of the new binary image from the partially patched image 30. It will be noted that, at this stage, the partially patched image 30 is obtained from the application of the first patch p₁ and the second patch p₂ to the old binary image 12. Accordingly, it contains sectors b₁ and b₂ of the new binary image. Forward index file f₃ identifies regions of similarity between the partially patched image 30 and the third sector b₃.

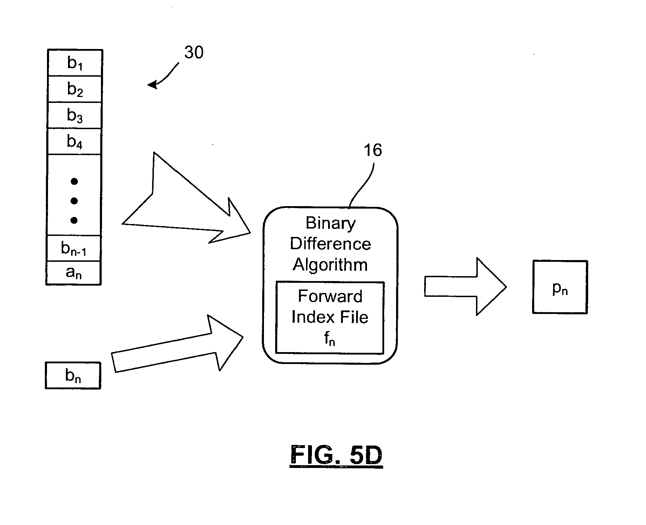

Finally, Figure 5D shows the generation of the final patch pₙ using the binary difference algorithm 16. At this stage the partially patched image 30 includes sectors b₁ to bₙ₋₁ of new binary image data. The final forward index file fₙ identifies regions of similarity between the partially patched image 30 and sector bₙ.

The incremental patch comprises the patches p₁ to pₙ. In some cases, the individual sector-based patches p₁ to pₙ may be referred to as "delta files". It will be appreciated that each sector-specific patch in the series of patches relies upon the then-current partially patched image 30 instead of the original old binary image 12.

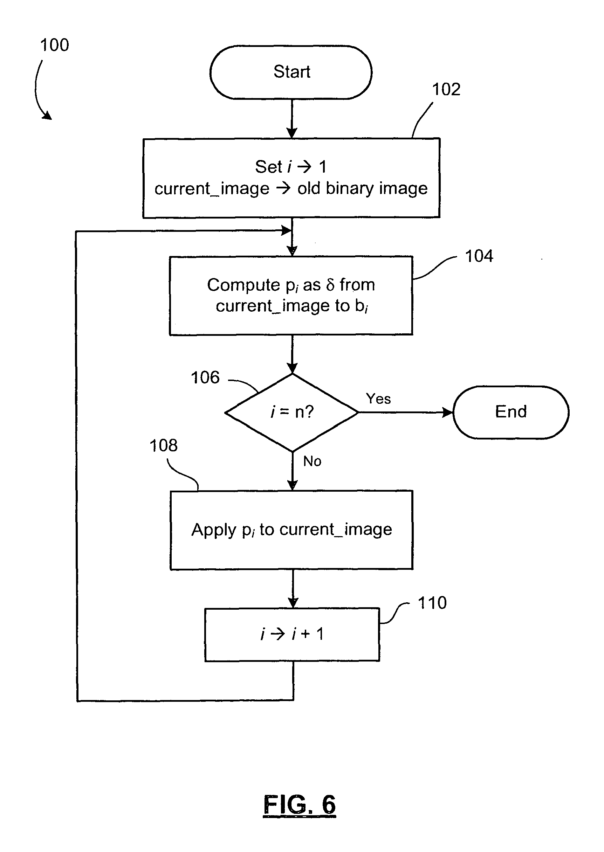

Reference is now made to Figure 6, which shows, in flowchart form, a method 100 for generating an incremental patch for updating an old binary image to a new binary image. The method 100 begins in step 102 by setting an index *i* to 1. The label current_image refers to the state of the image in flash memory, *i.e.* the partially patched image, at any given point in time. When the method 100 begins the image in memory is the old binary image, i.e. current_image is the old binary image.

In step 104, a delta file δ is computed from the current_image and sector b*ᵢ* of the new binary image. The delta file δ is the sector-specific patch p*ᵢ* used to obtain sector b*ᵢ* from the current_image. The delta file δ may be obtained by way of applying a suitable binary difference algorithm. The various binary difference algorithms available will be understood by those of ordinary skill in the art.

In step 106, the index *i* is checked to determine if the last sector b*ₙ* of the new image has been reached. If index *i* equals *n,* then the method 100 ends since the full set of sector-based patches p₁ - pₙ, *i.e.* the full incremental patch, has been computed. Otherwise, the method 100 continues at step 108.

In step 108, the sector-specific patch p*ᵢ* computed in step 104 is applied to the current_image, such that the current_image now reflects the incremental implementation of all patches from p₁ to p*ᵢ*. In one embodiment, the newly created patch p*ᵢ* is used to generate sector b*ᵢ* which is then written to memory over the current_image. This updated current_image will be used in the next iteration of step 104 to generate the next sector-specific patch. The index i is then incremented in step 110 and the method 100 returns to step 104 to generate the next delta file δ.

The embodiment described above in connection with Figures 5A-5D and Figure 6 generates the sector-specific patches p*ᵢ* in sequential order beginning with index i = 1; however, it will be appreciated that the sector-specific patches p*ᵢ* may be created in a different order in other embodiments. In some cases, the sequential generation of incremental sector-specific patches p*ᵢ* beginning with the first sector and going to the nth sector may involve the overwriting of data that would have proven useful in performing sector-specific patches later in the sequence. Accordingly, in one embodiment, the sequence may begin with index i = n and move in decrements to index *i* = 1. In yet another embodiment, the sector-specific patches p*ᵢ* may be created in any order instead of sequentially.

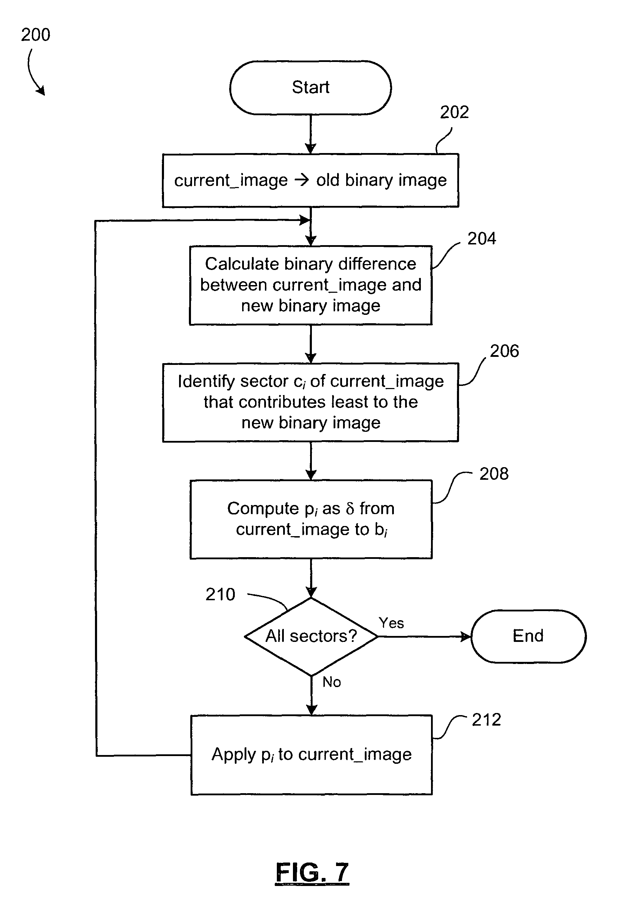

In one embodiment, the sector-specific patches p*ᵢ* may be created in a "least-damage" order. Reference is made to Figure 7, which shows, in flowchart form, another method 200 of generating an incremental patch for updating an old binary image to a new binary image.

The method 200 begins in step 202. The current_image at this stage of the method 200 is the old binary image. At step 204, a binary difference is calculated between the current_image and the new binary image. The binary difference between the two images may be calculated using a binary difference algorithm in a manner that will be understood by those of ordinary skill in the art.

At step 206, the results of step 204 are used to determine which sector c*ᵢ* of the current_image contributes the least to creating the new binary image. For example, in one embodiment, the sector c*ᵢ* of "least damage" may be identified as the sector having the fewest memory locations referenced in the binary difference file generated in step 204. In other words the sector c*ᵢ* contributes the least amount of data to the new binary image. A sector that contains no data that is referenced in the binary difference file is a sector of "least damage" since it may be wholly overwritten without losing any later referencing opportunities in performing an incremental patch. To the extent that some referencing opportunities are to be sacrificed by overwriting a portion of the current_image, step 206 attempts to identify the sector c*ᵢ* whose overwriting will result in the lowest quantity of lost data for referencing opportunities.

As the method 200 moves through iterations, step 204 is reassessed with the current_image, meaning that any sector-specific patches p*ᵢ* generated in previous iterations have been applied, such that those sectors c of the current_image match the corresponding sectors b of new binary image data. In one embodiment, sectors that have been completed in previous iterations may be explicitly excluded from the "least damage" assessment performed in step 206. In another embodiment, the method 200 may not explicitly exclude these completed sectors from the assessment since they will not be identified as "least damage" sectors due to the fact that they perfectly match the corresponding sectors in the new binary image and therefore appear highly relevant in the binary differencing operation of step 204.

It will be appreciated that any permutation of the sectors can be used to produce a series of patches by using the then-current partially patched image at each step. The choice of sector order does not materially affect the operation of the methods described in the present application. It will also be appreciated that in some instances the sector order that produces the minimal overall patch size may be impractical to find because the search belongs to the set of NP-complete problems. This impracticality is further compounded because each permutation requires a time consuming analysis to produce each incremental patch.

In one embodiment, the patch may be generated by way of a method that is the reverse analogue of the method 200 (Fig. 7). In this embodiment, the sector with the highest contribution is used to generate the "last" incremental patch working backwards to generate the "first" incremental patch.

In yet another embodiment, the patch may be generated by way of a method that starts with a random permutation of sectors. In this embodiment, the method makes changes to the permutation, and keeps the changes that make the total size of patches smaller in size. In one embodiment, this method may employ "simulated annealing" techniques. Simulated annealing starts with large changes to the sequence and progresses to smaller changes until no improvement can be found. Those of ordinary skill in the art will be familiar with the concept of "simulated annealing" for locating good approximations to a global optimum of a given function in a large search space.

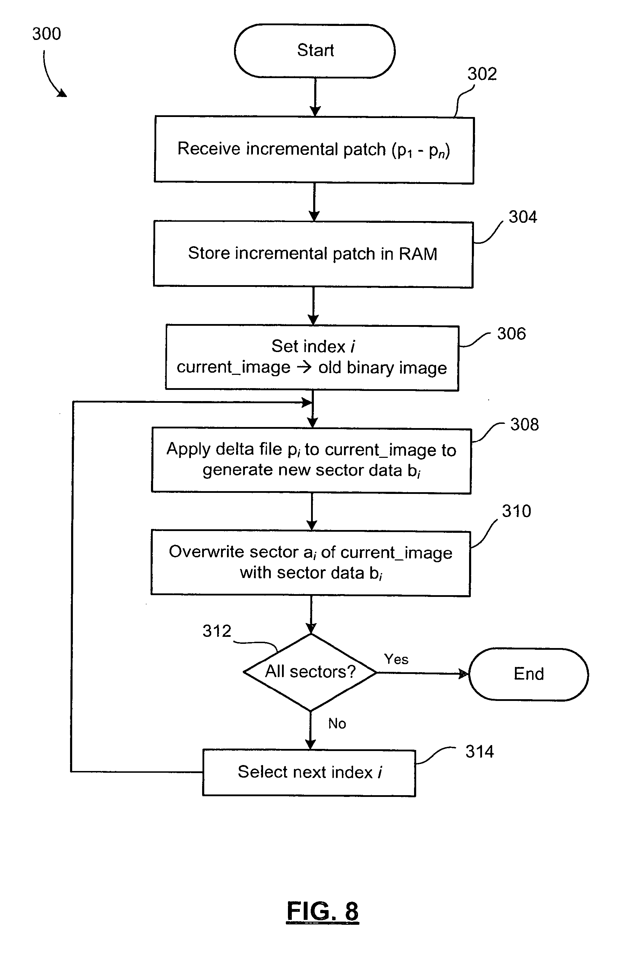

Reference is now made to Figure 8, which shows, in flowchart form, a method 300 of incrementally patching a binary image. The method 300 may be implemented by way of computer program code executable on a processing device. In at least one embodiment, the method 300 is implemented within a mobile electronic device having a flash memory.

The method 300 begins in step 302 with receipt of the incremental patch. In an embodiment involving a mobile electronic device, the incremental patch may be received via wireless communication from a wireless network. In other embodiments, it may be received through a wired connection from a remote source.

The incremental patch is stored in temporary memory in step 304. In one embodiment, the incremental patch may be stored in RAM memory resident on the mobile electronic device.

In step 306, the index i is set to a starting value. The starting value may be specified by the incremental patch. In an embodiment where the patch is intended to be applied sequentially beginning with the first sector of the image and proceeding to the nth sector, the index i may initially be set to 1. However, as noted above, the patch may be intended to be applied to sectors in other orders. The incremental patch may specify an indexing pattern that indicates the order in which the sectors are to be updated using the patch. Accordingly, the indexing pattern may indicate the starting value for the index i.

The label current_image refers to the state of the binary image, *e.g.* in flash memory, that is being updated by way of the incremental patch. The current_image may also be referred to as the partially patched image. In step 306, the current_image is the old binary image.

In step 308, delta file p*ᵢ* from the incremental patch, together with the current_image, is used to generate the data for sector b*ᵢ*. In step 310, the data for sector b*ᵢ* is written over the old data of sector a*ᵢ*. At step 312, the device assesses whether all sectors of the new binary image have been completed and, if so, then the method 300 ends. Otherwise, the method continues in step 314.

In step 314, the next index *i* is selected. As noted above, the selection of the next index i may be made in accordance with an indexing pattern specified in the incremental patch. The method 300 then returns to step 308 to repeat steps 308 and 310 with the next index i.

Reference is again made to Figure 3, which shows, in block diagram form, the host 70 and the mobile electronic device 80. In one embodiment, the forward patch 20 is an incremental patch.

The flash memory 86 is divided into sectors 88 (labeled individually 88a to 88x), wherein the sectors 88 are writeable blocks of memory. The old binary image 12 is stored in a range of the sectors 88 in flash memory 86. In accordance with the method 300 described in connection with Figure 8, the patch manager 92 employs the forward patch 20 to incrementally generate the data for the new binary image 14 and overwrite the old binary image data on a sector-by-sector basis, relying in each iteration upon the then-prevailing partially patched image 30 in flash memory 86 as the basis for generating the next sector of new binary image data.

### Reverse Incremental Patch

In embodiments where a forward patch is an incremental forward patch, the present application provides a method and system for generating an incremental reverse patch. The incremental reverse patch is generated as described above, with the indexing operation being performed at a host or server level to generate index files and the patch generation operation being performed at the device level after distribution of the index file(s) with the forward patch.

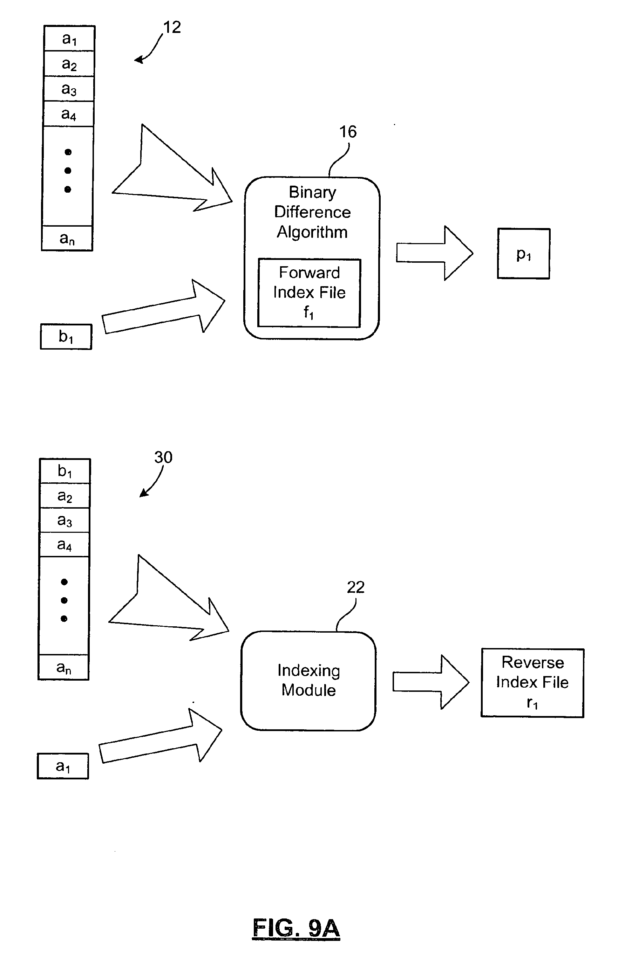

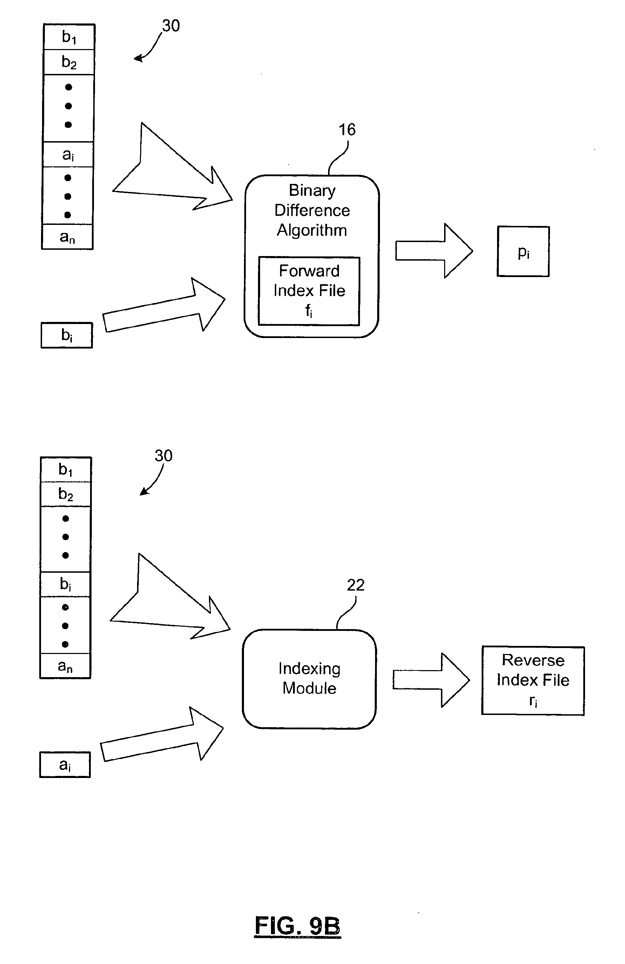

Reference is now made to Figures 9A and 9B, which diagrammatically illustrate the generation of incremental reverse index files for an incremental reverse patch, in accordance with one embodiment of the present application.

Figure 9A illustrates the generation of a first reverse index file r₁. As described previously in connection with Figure 5A, the host 70 (Fig. 3) generates a first patch p₁, using the binary difference algorithm 16. The first patch p₁ contains the instructions and data for generating the first sector b₁ of the new binary image 14 based upon the old binary image 12. After generating the first patch p₁, the partially patched image 30 is updated so as to include the first sector b₁ of the new binary image 14. However, prior to updating the partially patched image 30 by overwriting the first sector a₁ of the old binary image 12, the host 70 (Fig. 3) makes a copy of the first sector a₁ of the old binary image 12.

Using the indexing module 22, the host 70 (Fig. 3) then generates the reverse index file r₁ from the partially patched image 30 and the first sector a₁ of the old binary image 12. The reverse index file r₁ identifies the regions of similarity between the partially patched image 30 and the first sector a₁ of the old binary image 12. It will be appreciated that the reverse index file r₁ will later be used to create a reverse patch for generating the first sector a₁ from the partially patched image 30.

As illustrated in Figure 9B, the process of generating the incremental forward patches p*ᵢ* from the sectors bᵢ of the new binary image 14 and the then-current partially patched image 30 continues through all sectors of the new binary image 14. At each iteration, a reverse index file r*ᵢ* is generated that identifies the regions of similarity between the overwritten sector a*ᵢ* of the old binary image 12 and the then-current partially patched image 30.

Once all the sector-specific forward patches p*ᵢ* have been generated and all the sector-specific reverse index files r*ᵢ* have been generated, the host 70 (Fig. 3) then distributes the incremental patch (p₁ - pₙ) together with the set of reverse index files (r₁ - r*ₙ*). The incremental patch (p₁ - p*ₙ*) and the set of reverse index files (r₁ - r*ₙ*) may be packaged together as a deliverable 96 (Fig. 3) and transmitted to one or more remote client devices through one or more networks. The remote client devices may include mobile electronic devices.

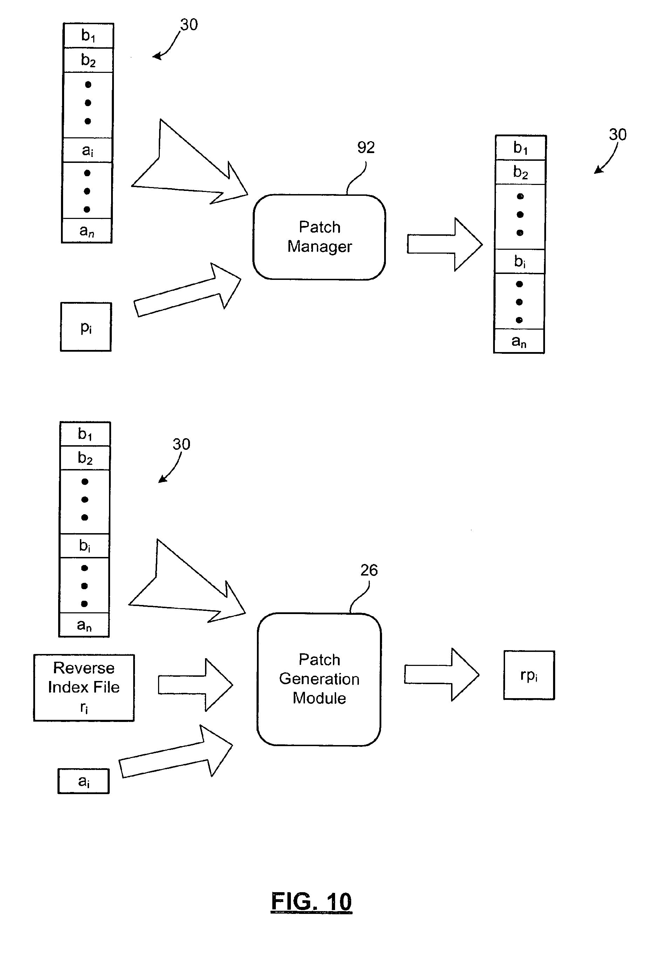

Reference is now made to Figure 10, which diagrammatically shows the generation of an incremental reverse patch during application of an incremental patch at a client device.

At the client device, the incremental patch (p₁ - p*ₙ*) is applied on a sector-by-sector basis. As illustrated in Figure 10, in one embodiment, the sector-specific patches (i.e. delta files) (p₁ - pₙ) may be applied in sequence from p₁ to pₙ, for generating sectors b₁ to bₙ. The application of patch p*ᵢ* to the then-current partially patched image 30 results in generation of new sector b*ᵢ*. Before overwriting old sector a*ᵢ* with new sector b*ᵢ*, the client device saves old sector a*ᵢ* in memory so as to use it for generating the incremental reverse patch.

The client device generates the sector-specific reverse patches rp*ᵢ* using the patch generation module 26. Each sector-specific reverse patch rp*ᵢ* contains commands for generating one of the old sectors a*ᵢ* from one of the then-current partially patched images 30. To generate one of the reverse patches rp*ᵢ*, the patch generation module 26 uses the old sector a*ᵢ*, the then-current partially patched image 30 containing new sector b*ᵢ*, and the reverse index file r*ᵢ*. The reverse index file r*ᵢ* identifies the regions of similarity between old sector a*ᵢ* and the then-current partially patched image 30.

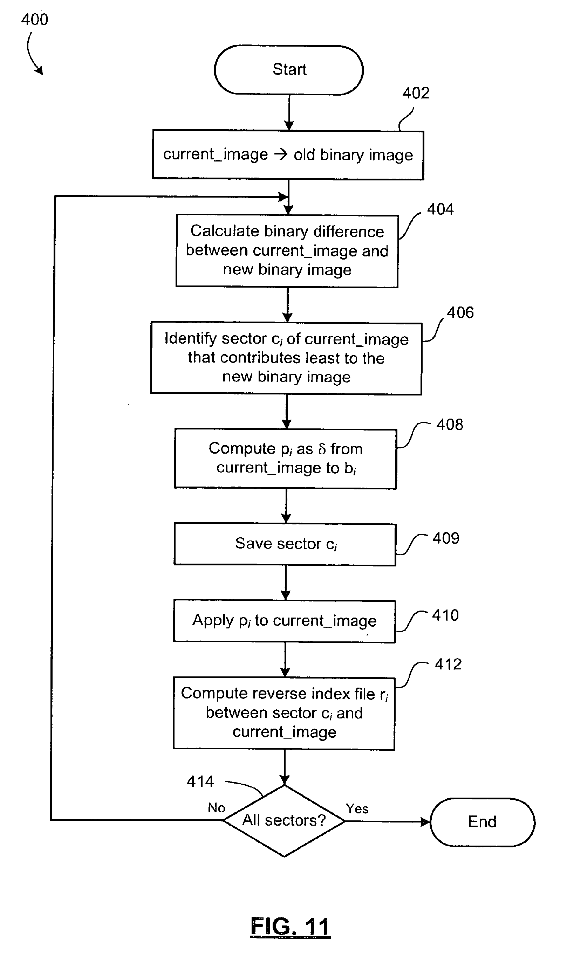

Reference is now made to Figure 11, which shows, in flowchart form, an embodiment of a method 400 for generating reverse index files for creating a reverse patch. The method 400 is similar to the method 200 (Fig. 7) in that it describes the steps for creating an incremental forward patch in a "least damage" order. The method 400 differs in that it also includes steps for creating the reverse index files that correspond to the sector-specific delta files p*ᵢ* that make up the incremental forward patch.

The method 400 begins in step 402, wherein the old binary image 12 in memory is designated as the current image, as indicated by the label current_image. In step 404, the binary difference between the current_image and the new binary image is determined, and the results are used in step 406 to identify the sector c*ᵢ* of current_image that contributes least to the new binary image. In other words, in step 406, the sector c*ᵢ* is identified on the basis that, when it is overwritten, the least amount of similar data will be lost.

Having identified the sector c*ᵢ*, in step 408 the delta file p*ᵢ* is generated. The delta file p*ᵢ* (i.e. sector-specific forward patch p*ᵢ*) contains the commands and data for generating new sector b*ᵢ* from the current_image. In step 409, sector c*ᵢ* of the current_image is saved. The sector c*ᵢ* may be saved in RAM, in flash memory, or in any other suitable memory. Then in step 410, sector c*ᵢ* is overwritten with new sector b*ᵢ*. In other words, in step 410 the delta file p*ᵢ* is applied to the current_image.

In step 412, the reverse index file r*ᵢ* is computed. The reverse index file r*ᵢ* identifies the regions of similarity between the current_image (including new sector b*ᵢ*) and saved sector c*ᵢ*. As described previously, the computation of the reverse index file r*ᵢ* may be performed using suffix sorting, hashing, or any other suitable algorithm for identifying regions of similarity between two binary images.

In step 414 of the method 400, the host 70 (Fig. 3) determines whether all of the sector-specific delta files p*ᵢ* and their corresponding reverse index files r*ᵢ* have been generated. If not, then the method 400 loops back to step 404 to identify the next sector. If so, then the method 400 ends. Following the method 400, the host 70 (Fig. 3) may package the collection of delta files (p₁ - pₙ), *i.e.* the incremental forward patch, together with the set of reverse index files (r₁ - r*ₙ*) as a deliverable 96 (Fig. 3). The deliverable 96 may then be distributed to client devices.

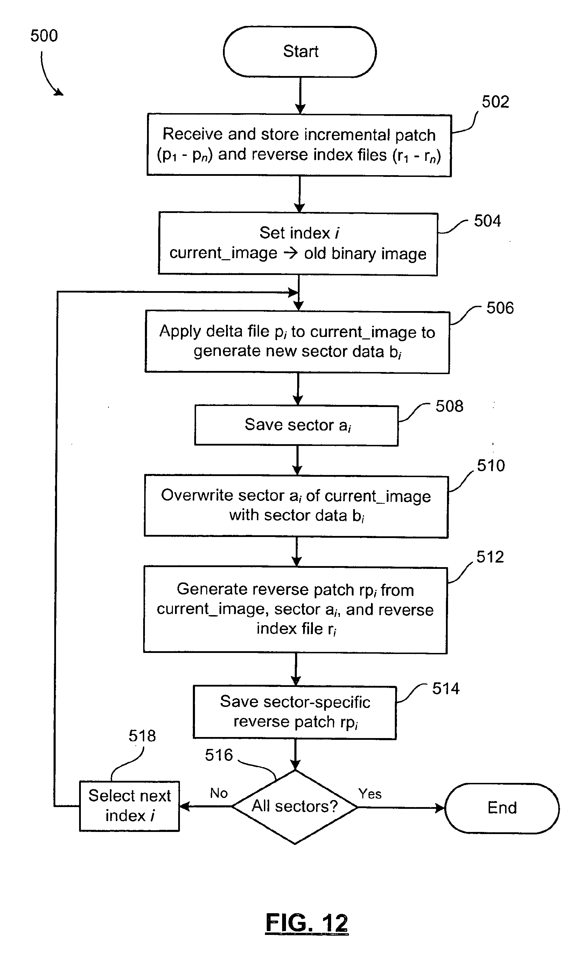

Referring now to Figure 12, there is shown, in flowchart form, a method 500 of generating an incremental reverse patch on a client device. The method 500 begins in step 502 with the reception and storage of the incremental forward patch (p₁ - pₙ) and the set of reverse index files (r₁ - r*ₙ*).

In step 504, the index i is set to a starting value. The starting value may be specified by the incremental patch. In an embodiment where the patch is intended to be applied sequentially beginning with the first sector of the image and proceeding to the nth sector, the index i may initially be set to 1. However, as noted above, the forward patch may be intended to be applied to sectors in other orders. The incremental forward patch may specify an indexing pattern that indicates the order in which the sectors are to be updated using the patch. Accordingly, the indexing pattern may indicate the starting value for the index i.

The label current_image refers to the state of the binary image, *e.g.* in flash memory, that is being updated by way of the incremental forward patch. The current_image may also be referred to as the partially patched image. In step 504, the current_image is the old binary image.

In step 506, delta file p*ᵢ* is used to generate new sector b*ᵢ* from the current_image. In step 508, sector a*ᵢ* within the current_image is saved elsewhere in memory. In some embodiments, sector a*ᵢ* may be saved in RAM, in flash memory, or in other suitable memory on the client device. Sector a*ᵢ* within the current_image is then overwritten in step 510 with new sector b*ᵢ*, to create the updated current_image.

In step 512, the client device then generates sector-specific reverse patch rp*ᵢ* from the current_image, the saved sector a*ᵢ*, and reverse index file r*ᵢ*. Reverse index file r*ᵢ* describes the regions of similarity between saved sector a*ᵢ* and the current_image. The sector-specific reverse patch rp*ᵢ* is then saved to memory in step 514. In many embodiments, the sector-specific reverse patch rp*ᵢ* is saved to non-volatile memory, such as flash memory.

In step 516, the client device determines whether the incremental patching operation is complete, i.e. whether all the new sectors b₁ to b*ₙ* have been generated. If not, then the method 500 continues to step 518, wherein the next index i is selected. As described above, this step may, in some embodiments, include incrementing the index i. In some other embodiments, this step may include setting index i to an integer prescribed by an indexing pattern, as discussed above. Following step 518, the method 500 loops back to step 506 to continue application of the incremental forward patch and generation of the incremental reverse patch.

If all sectors have been completed, then following step 516 the method 500 ends. At this point, the full incremental reverse patch (rp₁ to rp*ₙ*) has been generated and saved in memory. Accordingly, should the user determine at some point in the future that he or she wishes to undo or roll back the forward patch, then the incremental reverse patch is available to recover the old binary image.

The present application describes various software components, modules, object, programs or other machine-readable code elements, and the execution of those software components by a suitable processor. The programming of such software components will be within the understanding of a person of ordinary skill in the art having regard to the detailed description herein.

Certain adaptations and modifications of the described embodiments can be made. Therefore, the above discussed embodiments are considered to be illustrative and not restrictive.

## Claims

1. A method of providing a reverse index file (42) for generating a reverse patch (44) for reversing a forward patch (20) on an electronic device (80), wherein the forward patch (20) generates a new binary image (14) from an old binary image (12), the method comprising the steps of:
generating the reverse index file (42) at a server (70), the reverse index file (42) identifying regions of similarity between the old binary image (12) and the new binary image (14) for use in obtaining at least a portion of the old binary image (12) from the new binary image (14); and
transmitting the forward patch (20) and the reverse index file (42) from the server (70) to the electronic device (80).

2. A method of generating a reverse patch (44), including the steps claimed in claim 1, and further comprising:
applying the forward patch (20) to the old binary image (12) to create the new binary image (14) at the electronic device (80); and
generating the reverse patch (44) from the new binary image (14), the old binary image (12), and the reverse index file (42) at the electronic device (80).

3. The method claimed in claim 2, wherein said steps of generating the reverse index file (42), applying the forward patch (20), and generating the reverse patch (44) are performed on a sector-by-sector basis.

4. The method claimed in any one of the preceding claims, further comprising a step of generating the forward patch (20).

5. The method claimed in claim 4, wherein the new binary image (14) occupies a plurality of sectors, and wherein said steps of generating the forward patch (20) and generating the reverse index file (42) comprise:
setting a current image (30) as the old binary image (12),
selecting one of the plurality of sectors from the new binary image (14),
computing a binary difference algorithm (16) to generate a delta file (pᵢ) for obtaining said one of the plurality of sectors from the current image (30),
overwriting an old sector within the current image (30) with said one of the plurality of sectors, while retaining a copy of the old sector,
generating a sector-specific reverse index file (rᵢ), wherein the sector-specific reverse index file (rᵢ) identifies regions of similarity between said old sector and said current image (30), and
repeating the steps of selecting, computing, overwriting, and generating once for each of the plurality of sectors,
and wherein the forward patch (20) comprises a plurality of delta files (p₁-pₙ) created from the computing steps, and wherein the reverse index file (42) comprises a plurality of sector-specific reverse index files (r₁-rₙ) created from the generating steps.

6. The method claimed in claim 2 or claim 3, wherein the new binary image (14) occupies a plurality of sectors, the forward patch (20) comprises a plurality of sector-specific delta files (p₁-pₙ) each for obtaining one of said plurality of sectors, the reverse index file (42) comprises a plurality of sector-specific reverse index files (r₁-rₙ), and wherein the steps of applying the forward patch (20) and generating the reverse patch (44) comprise:
setting a current image (30) as the old binary image (12),
selecting one of the plurality of sectors from the new binary image (14),
applying one of said plurality of sector-specific delta files (p₁-pₙ) to the current image (30) to generate said one of the plurality of sectors,
overwriting an old sector within the current image (30) with said one of the plurality of sectors while retaining a copy of the old sector,
generating a sector-specific reverse patch (rpᵢ) from the current image (30), the old sector, and one of the sector-specific reverse index files (rᵢ), wherein said sector-specific index file (rᵢ) identifies regions of similarity between said old sector and said current image (30), and
repeating the steps of selecting, applying, overwriting, and generating once for each of the plurality of sectors,
and wherein the reverse patch (44) comprises a plurality of said sector-specific reverse patches (rp₁-rpₙ).

7. The method claimed in any one of the preceding claims, wherein said step of generating the reverse index file (42) comprises performing an indexing operation, and wherein said indexing operation comprises hashing or suffix sorting.

8. The method claimed in any one of the preceding claims, wherein said step of transmitting comprises packaging said forward patch (20) and said reverse index file (42) together as a deliverable (96), and transmitting said deliverable over one or more communications networks (60).

9. The method claimed in claim 8, wherein said electronic device (80) comprises a mobile wireless device (80), and wherein said one or more communications networks (60) comprise a wireless network (60).

10. The method claimed in any one of the preceding claims, further comprising a step of storing said reverse patch (44) in non-volatile memory (86) on said device (80).

11. A method at an electronic device (80) of generating a reverse patch (44) for reversing a forward patch (20), wherein the forward patch (20) generates a new binary image (14) from an old binary image (12), the method comprising the steps of:
receiving the forward patch (20) and a reverse index file (42) from a server (70), the reverse index file (42) identifying regions of similarity between the old binary image (12) and the new binary image (14) for use in obtaining at least a portion of the old binary image (12) from the new binary image (14);
applying the forward patch (20) to the old binary image (12) to create the new binary image (14); and
generating the reverse patch (44) from the new binary image (14), the old binary image (12), and the reverse index file (42).

12. The method claimed in claim 11, wherein said steps of applying the forward patch (20) and generating the reverse patch (44) are performed on a sector-by-sector basis.

13. The method claimed in claim 12, wherein the new binary image (14) occupies a plurality of sectors, the forward patch (20) comprises a plurality of sector-specific delta files (p₁-pₙ) each for obtaining one of said plurality of sectors, the reverse index file (42) comprises a plurality of sector-specific reverse index files (r₁-rₙ), and wherein the steps of applying the forward patch (20) and generating the reverse patch (44) comprise:
setting a current image (30) as the old binary image (12),
selecting one of the plurality of sectors from the new binary image (14),
applying one of said plurality of sector-specific delta files (p₁-pₙ) to the current image (30) to generate said one of the plurality of sectors, overwriting an old sector within the current image (30) with said one of the plurality of sectors while retaining a copy of the old sector,
generating a sector-specific reverse patch (rpᵢ) from the current image (30), the old sector, and one of the sector-specific reverse index files (rᵢ), wherein said sector-specific index file (rᵢ) identifies regions of similarity between said old sector and said current image (30), and
repeating the steps of selecting, applying, overwriting, and generating once for each of the plurality of sectors,
and wherein the reverse patch (44) comprises a plurality of said sector-specific reverse patches (rp₁-rpₙ).

14. The method claimed in any one of claims 11 to 13, wherein said step of receiving comprises receiving the forward patch (20) and the reverse index file (42) over a communications network (60), and storing the forward patch (20) and the reverse index file (42) in memory on the electronic device (80).

15. The method claimed in claim 14, wherein said electronic device (80) comprises a mobile wireless device (80), and wherein said communications network (60) comprises a wireless network (60).

16. The method claimed in any one of claims 11 to 15, further comprising a step of storing said reverse patch (44) in non-volatile memory (86) on said electronic device (80).

17. A system for providing a reverse index file (42) for generating a reverse patch (44) for reversing a forward patch (20), wherein the forward patch (20) generates a new binary image (14) from an old binary image (12), the system comprising:
a server (70) having a processor (50) and memory (52) for storing the new binary image (14) and the old binary image (12), and for storing the forward patch (20), and having an indexing module (22) executable by the processor (50) for generating a reverse index file (42), the reverse index file (42) identifying regions of similarity between the old binary image (12) and the new binary image (14) for use in obtaining at least a portion of the old binary image (12) from the new binary image (14), the server (70) comprising a communications interface (94) for transmitting the forward patch (20) and the reverse index file (42) from the server (70) to an electronic device (80).

18. The system claimed in claim 17 further comprising the electronic device (80), wherein said electronic device (80) has a device processor (84) and device memory (86, 90) for storing the forward patch (20) and the reverse index file (42) received from the server (70) via one or more communications networks (60), the electronic device (80) comprising a patch manager (92) for applying the forward patch (20) to the old binary image (12) to create the new binary image (14), and comprising a patch generation module (26) for generating the reverse patch (44) from the new binary image (14), the old binary image (12), and the reverse index file (42).

19. The system claimed in claim 18, wherein said indexing module (22) is configured to generate said reverse index file (42) on a sector-by-sector basis, wherein said patch manager (92) is configured to apply the forward patch (20) on a sector-by-sector basis, and wherein said patch generation module (26) is configured to generate the reverse patch (44) on a sector-by-sector basis.

20. The system claimed in any one of claims 17 to 19, wherein said server (70) further comprises a binary difference algorithm (16) for generating said forward patch (20).

21. The system claimed in claim 20, wherein the new binary image (14) occupies a plurality of sectors, and wherein said binary difference algorithm (16) and said indexing module (22) comprise:
a component for setting a current image (30) as the old binary image (12),
a component for selecting one of the plurality of sectors from the new binary image (14),
a component for computing said binary difference algorithm (16) to generate a delta file (pᵢ) for obtaining said one of the plurality of sectors from the current image (30),
a component for overwriting an old sector within the current image (30) with said one of the plurality of sectors, while retaining a copy of the old sector, and
a component generating a sector-specific reverse index file (rᵢ), wherein the sector-specific reverse index file (rᵢ) identifies regions of similarity between said old sector and said current image (30),
and wherein said components for selecting, computing, overwriting, and generating are configured to operate once for each of the plurality of sectors, and wherein the forward patch (20) comprises a plurality of delta files (p₁-pₙ) created by the component for computing, and wherein the reverse index file (42) comprises a plurality of sector-specific reverse index files (r₁-rₙ) created by the component for generating.

22. The system claimed in claim 18 or claim 19, wherein the new binary image (14) occupies a plurality of sectors, the forward patch (20) comprises a plurality of sector-specific delta files (p₁-pₙ) each for obtaining one of said plurality of sectors, the reverse index file (42) comprises a plurality of sector-specific reverse index files (r₁-rₙ), and wherein the patch manager (92) and the patch generation module (26) comprise:
a component for setting a current image (30) as the old binary image (12),
a component for selecting one of the plurality of sectors from the new binary image (14),
a component for applying one of said plurality of sector-specific delta files (pᵢ) to the current image (30) to generate said one of the plurality of sectors,
a component for overwriting an old sector within the current image (30) with said one of the plurality of sectors while retaining a copy of the old sector, and
a component for generating a sector-specific reverse patch (rpᵢ) from the current image (30), the old sector, and one of the sector-specific reverse index files (rᵢ), wherein said sector-specific reverse index file (rᵢ) identifies regions of similarity between said old sector and said current image (30),
and wherein said components for selecting, applying, overwriting, and generating are configured to operate once for each of the plurality of sectors, and wherein the reverse patch (44) comprises a plurality of said sector-specific reverse patches (rp₁-rpₙ).

23. The system claimed in any one of claims 17 to 22, wherein said indexing module (22) for generating the reverse index file (42) comprises an indexing operator, which comprises hashing or suffix sorting.

24. The system claimed in any one of claims 17 to 23, wherein said electronic device (80) comprises a mobile wireless device (80), and further comprising a wireless network (60) over which said server (70) is arranged to transmit the forward patch (20) and the reverse index file (42) to the mobile wireless device (80).

25. The system claimed in any one of claims 17 to 24, wherein said electronic device (80) comprises non-volatile memory (86) for storing said reverse patch (44).

26. An electronic device (80) for generating a reverse patch (44) for reversing a forward patch (20), wherein the forward patch (20) generates a new binary image (14) from an old binary image (12), the electronic device (80) comprising:
a device processor (84);
a communications subsystem (82) for receiving the forward patch (20) and the reverse index file (42) from a server (70) via one or more communications networks (60);
device memory (86, 90) for storing the forward patch (20) and the reverse index file (42);
a patch manager (92) for applying the forward patch (20) to the old binary image (12) to create the new binary image (14);
a patch generation module (26) for generating the reverse patch (44) from the new binary image (14), the old binary image (12), and the reverse index file (42).

27. The electronic device claimed in claim 26, wherein said patch manager (92) is configured to operate on a sector-by-sector basis, and wherein said patch generation module (26) is configured to operate on a sector-by-sector basis.

28. The electronic device claimed in claim 27, wherein the new binary image (14) occupies a plurality of sectors, the forward patch (20) comprises a plurality of sector-specific delta files (p₁-pₙ) each for obtaining one of said plurality of sectors, the reverse index file (42) comprises a plurality of sector-specific reverse index files (r₁-rₙ), and wherein the patch manager (92) and the patch generation module (26) comprise:
a component for setting a current image (30) as the old binary image (12),
a component for selecting one of the plurality of sectors from the new binary image (14),
a component for applying one of said plurality of sector-specific delta files (pᵢ) to the current image (30) to generate said one of the plurality of sectors,
a component for overwriting an old sector within the current image (30) with said one of the plurality of sectors while retaining a copy of the old sector, and
a component for generating a sector-specific reverse patch (rpᵢ) from the current image (30), the old sector, and one of the sector-specific reverse index files (rᵢ), wherein said sector-specific reverse index file (rᵢ) identifies regions of similarity between said old sector and said current image (30),
and wherein said components for selecting, applying, overwriting, and generating are configured to operate once for each of the plurality of sectors, and wherein the reverse patch (44) comprises a plurality of said sector-specific reverse patches (rp₁-rpₙ).

29. The electronic device claimed in any one of claims 26 to 28, wherein said electronic device (80) comprises a mobile wireless device (80), and wherein said one or more communications networks (60) comprise a wireless network (60).

30. The electronic device claimed in any one of claims 26 to 29, further comprising non-volatile memory (86) for storing said reverse patch (44).

31. A machine-readable medium embodying program code executable by a processor of a computing device for causing said computing device to implement the method of any one of claims 1 to 16.

## Patentansprüche

1. Verfahren zum Bereitstellen einer Rückindexdatei (42) zum Erzeugen eines Rückpatches (44) zum Zurücknehmen eines Vorwärtspatches (20) auf einer elektronischen Vorrichtung (80), wobei der Vorwärtspatch (20) aus einem alten binären Abbild (12) ein neues binäres Abbild (14) erzeugt, wobei in dem Verfahren
bei einem Server (70) die Rückindexdatei (42) erzeugt wird, die zur Verwendung zum Erhalten mindestens eines Abschnittes des alten binären Abbildes (12) aus dem neuen binären Abbild (14) Ähnlichkeitsbereiche zwischen dem alten binären Abbild (12) und dem neuen binären Abbild (14) identifiziert, und
der Vorwärtspatch (20) und die Rückindexdatei (42) vom Server (70) an die elektronische Vorrichtung (80) übermittelt werden.

2. Verfahren zum Erzeugen eines Rückpatches (44) mit den Schritten aus Anspruch 1, wobei in dem Verfahren ferner
der Vorwärtspatch (20) auf das alte binäre Abbild (12) angewendet wird, um an der elektronischen Vorrichtung (80) das neue binäre Abbild (14) zu erstellen, und
an der elektronischen Vorrichtung (80) aus dem neuen binären Abbild (14), dem alten binären Abbild (12) und der Rückindexdatei (42) der Rückpatch (44) erzeugt wird.

3. Verfahren nach Anspruch 2, wobei das Erzeugen der Rückindexdatei (42), das Anwenden des Vorwärtspatches (20) und das Erzeugen des Rückpatches (44) sektorweise erfolgen.

4. Verfahren nach einem der vorhergehenden Ansprüche, wobei in dem Verfahren ferner der Vorwärtspatch (20) erzeugt wird.

5. Verfahren nach Anspruch 4, wobei das neue binäre Abbild (14) mehrere Sektoren belegt und beim Erzeugen des Vorwärtspatches (20) und dem Erzeugen der Rückindexdatei (42)
ein gegenwärtiges Bild (30) als das alte binäre Abbild (12) gesetzt wird, aus dem neuen binären Abbild (14) einer der mehreren Sektoren ausgewählt wird,
ein Binärdifferenzalgorithmus (16) berechnet wird, um eine Deltadatei (pᵢ) zum Erhalten des einen der mehreren Sektoren aus dem gegenwärtigen Bild (30) zu erzeugen,
ein alter Sektor innerhalb des gegenwärtigen Bildes (30) mit dem einen der mehreren Sektoren überschrieben wird, während eine Kopie des alten Sektors zurückbehalten wird,
eine sektorspezifische Rückindexdatei (rᵢ) erzeugt wird, wobei die sektorspezifische Rückindexdatei (rᵢ) Ähnlichkeitsbereiche zwischen dem alten Sektor und dem gegenwärtigen Bild (30) identifiziert, und
das Auswählen, das Berechnen, das Überschreiben und das Erzeugen für jeden der mehreren Sektoren einmal wiederholt wird,
wobei der Vorwärtspatch (20) mehrere beim Berechnen erstellte sektorspezifische Deltadateien (p₁-pₙ) enthält und die Rückindexdatei (42) mehrere beim Erzeugen erstellte sektorspezifische Rückindexdateien (r₁-rₙ) enthält.

6. Verfahren nach Anspruch 2 oder 3, wobei das neue binäre Abbild (14) mehrere Sektoren belegt, der Vorwärtspatch (20) mehrere sektorspezifische Deltadateien (p₁-pₙ), jeweils eine zum Erhalten eines der mehreren Sektoren, enthält, die Rückindexdatei (42) mehrere sektorspezifische Rückindexdateien (r₁-rₙ) enthält, wobei beim Anwenden des Vorwärtspatches (20) und dem Erzeugen des Rückpatches (44) ein gegenwärtiges Bild (30) als das alte binäre Abbild (12) gesetzt wird, aus dem neuen binären Abbild (14) einer der mehreren Sektoren ausgewählt wird,
eine der mehreren sektorspezifischen Deltadateien (p₁-pₙ) auf das gegenwärtige Bild (30) angewendet wird, um den einen der mehreren Sektoren zu erzeugen,
ein alter Sektor innerhalb des gegenwärtigen Bildes (30) mit dem einen der mehreren Sektoren überschrieben wird, während eine Kopie des alten Sektors zurückbehalten wird,
aus dem gegenwärtigen Bild (30), dem alten Sektor und einer der sektorspezifischen Rückindexdateien (rᵢ) ein sektorspezifischer Rückpatch (rpᵢ) erzeugt wird, wobei die sektorspezifische Indexdatei (rᵢ) Ähnlichkeitsbereiche zwischen dem alten Sektor und dem gegenwärtigen Bild (30) identifiziert, und
das Auswählen, das Anwenden, das Überschreiben und das Erzeugen für jeden der mehreren Sektoren einmal wiederholt wird,
und wobei der Rückpatch (44) mehrere der sektorspezifischen Rückpatches (rp₁-rpₙ) enthält.

7. Verfahren nach einem der vorhergehenden Ansprüche, wobei beim Erzeugen der Rückindexdatei (42) ein Indexiervorgang durchgeführt wird, wobei beim Indexiervorgang ein Hashing oder ein Sorting nach Suffixes durchgeführt wird.

8. Verfahren nach einem der vorhergehenden Ansprüche, wobei beim Übermitteln der Vorwärtspatch (20) und die Rückindexdatei (42) zu einer Liefereinheit (96) zusammen verpackt werden und die Liefereinheit über ein oder mehrere Kommunikationsnetze (60) übermittelt wird.

9. Verfahren nach Anspruch 8, wobei die elektronische Vorrichtung (80) eine mobile, drahtlose Vorrichtung (80) enthält und das eine oder die mehreren Kommunikationsnetze (60) ein Drahtlosnetz (60) enthalten.

10. Verfahren nach einem der vorhergehenden Ansprüche, wobei in dem Verfahren ferner der Rückpatch (44) in einem Permanentspeicher (86) auf der Vorrichtung (80) gespeichert wird.

11. Verfahren an einer elektronischen Vorrichtung (80) zum Erzeugen eines Rückpatches (44) zum Zurücknehmen eines Vorwärtspatches (20), wobei der Vorwärtspatch (20) aus einem alten binären Abbild (12) ein neues binäres Abbild (14) erzeugt, wobei in dem Verfahren der Vorwärtspatch (20) und eine Rückindexdatei (42) von einem Server (70) empfangen werden, wobei die Rückindexdatei (42) zur Verwendung zum Erhalten mindestens eines Abschnittes des alten binären Abbildes (12) aus dem neuen binären Abbild (14) Ähnlichkeitsbereiche zwischen dem alten binären Abbild (12) und dem neuen binären Abbild (14) identifiziert,
der Vorwärtspatch (20) auf das alte binäre Abbild (12) angewendet wird, um das neue binäre Abbild (14) zu erstellen, und
aus dem neuen binären Abbild (14), dem alten binären Abbild (12) und der Rückindexdatei (42) der Rückpatch (44) erzeugt wird.

12. Verfahren nach Anspruch 11, wobei das Anwenden des Vorwärtspatches (20) und das Erzeugen des Rückpatches (44) sektorweise erfolgen.

13. Verfahren nach Anspruch 12, wobei das neue binäre Abbild (14) mehrere Sektoren belegt, der Vorwärtspatch (20) mehrere sektorspezifische Deltadateien (p₁-pₙ), jeweils eine zum Erhalten eines der mehreren Sektoren, enthält, die Rückindexdatei (42) mehrere sektorspezifische Rückindexdateien (r₁-rₙ) enthält, wobei beim Anwenden des Vorwärtspatches (20) und dem Erzeugen des Rückpatches (44) ein gegenwärtiges Bild (30) als das alte binäre Abbild (12) gesetzt wird, aus dem neuen binären Abbild (14) einer der mehreren Sektoren ausgewählt wird,
eine der mehreren sektorspezifischen Deltadateien (p₁-pₙ) auf das gegenwärtige Bild (30) angewendet wird, um den einen der mehreren Sektoren zu erzeugen,
ein alter Sektor innerhalb des gegenwärtigen Bildes (30) mit dem einen der mehreren Sektoren überschrieben wird, während eine Kopie des alten Sektors zurückbehalten wird,
aus dem gegenwärtigen Bild (30), dem alten Sektor und einer der sektorspezifischen Rückindexdateien (rᵢ) ein sektorspezifischer Rückpatch (rpᵢ) erzeugt wird, wobei die sektorspezifische Indexdatei (rᵢ) Ähnlichkeitsbereiche zwischen dem alten Sektor und dem gegenwärtigen Bild (30) identifiziert, und
das Auswählen, das Anwenden, das Überschreiben und das Erzeugen für jeden der mehreren Sektoren einmal wiederholt wird,
wobei der Rückpatch (44) mehrere der sektorspezifischen Rückpatches (rp₁-rpₙ) enthält.

14. Verfahren nach einem der Ansprüche 11 bis 13, wobei beim Empfangen der Vorwärtspatch (20) und die Rückindexdatei (42) über ein Kommunikationsnetz (60) empfangen und in einem Speicher auf der elektronischen Vorrichtung (80) gespeichert werden.

15. Verfahren nach Anspruch 14, wobei die elektronische Vorrichtung (80) eine mobile, drahtlose Vorrichtung (80) enthält und das Kommunikationsnetz (60) ein Drahtlosnetz (60) enthält.

16. Verfahren nach einem der Ansprüche 11 bis 15, wobei in dem Verfahren ferner der Rückpatch (44) in einem Permanentspeicher (86) auf der elektronischen Vorrichtung (80) gespeichert wird.

17. System zum Bereitstellen einer Rückindexdatei (42) zum Erzeugen eines Rückpatches (44) zum Zurücknehmen eines Vorwärtspatches (20), wobei der Vorwärtspatch (20) aus einem alten binären Abbild (12) ein neues binäres Abbild (14) erzeugt, wobei das System
einen Server (70) enthält, der einen Prozessor (50) und einen Speicher (52) zum Speichern des neuen binären Abbildes (14) und des alten binären Abbildes (12) und zum Speichern des Vorwärtspatches (20) aufweist und ein vom Prozessor (50) ausführbares Indexmodul (22) zum Erzeugen einer Rückindexdatei (42) aufweist, wobei die Rückindexdatei (42) zur Verwendung zum Erhalten mindestens eines Abschnittes des alten binären Abbildes (12) aus dem neuen binären Abbild (14) Ähnlichkeitsbereiche zwischen dem alten binären Abbild (12) und dem neuen binären Abbild (14) identifiziert und der Server (70) eine Kommunikationsschnittstelle (94) zum Übermitteln des Vorwärtspatches (20) und der Rückindexdatei (42) vom Server (70) an eine elektronische Vorrichtung (80) enthält.

18. System nach Anspruch 17, wobei das System ferner die elektronische Vorrichtung (80) enthält, die einen Vorrichtungsprozessor (84) und einen Vorrichtungsspeicher (86, 90) zum Speichern des Vorwärtspatches (20) und der Rückindexdatei (42) aufweist, die über ein oder mehrere Kommunikationsnetze (60) vom Server (70) empfangen sind, wobei die elektronische Vorrichtung (80) einen Patchverwalter (92) zum Anwenden des Vorwärtspatches (20) auf das alte binäre Abbild (12), um das neue binäre Abbild (14) zu erstellen, mit einem Patcherzeugemodul (26) zum Erzeugen des Rückpatches (44) aus dem neuen binären Abbild (14), dem alten binären Abbild (12) und der Rückindexdatei (42) enthält.

19. System nach Anspruch 18, wobei das Indexmodul (22) dazu konfiguriert ist, die Rückindexdatei (42) sektorweise zu erzeugen, wobei der Patchverwalter (92) dazu konfiguriert ist, den Vorwärtspatch (20) sektorweise anzuwenden, und das Patcherzeugemodul (26) dazu konfiguriert ist, den Rückpatch (44) sektorweise zu erzeugen.

20. System nach einem der Ansprüche 17 bis 19, wobei der Server (70) ferner einen Binärdifferenzalgorithmus (16) zum Erzeugen des Vorwärtspatches (20) enthält.

21. System nach Anspruch 20, wobei das neue binäre Abbild (14) mehrere Sektoren belegt und der Binärdifferenzalgorithmus (16) und das Indexmodul (22) Folgendes enthalten:
eine Komponente zum Setzen des gegenwärtigen Bild (30) als das alte binäre Abbild (12),
eine Komponente zum Auswählen eines der mehreren Sektoren aus dem neuen binären Abbild (14),
eine Komponente zum Berechnen eines Binärdifferenzalgorithmus (16) zum Erzeugen einer Deltadatei (pᵢ) zum Erhalten des einen der mehreren Sektoren aus dem gegenwärtigen Bild (30),
eine Komponente zum Überschreiben eines alten Sektors innerhalb des gegenwärtigen Bildes (30) mit dem einen der mehreren Sektoren,
während eine Kopie des alten Sektors zurückbehalten wird, und
eine Komponente, die eine sektorspezifische Rückindexdatei (rᵢ) erzeugt,
wobei die sektorspezifische Rückindexdatei (rᵢ) Ähnlichkeitsbereiche zwischen dem alten Sektor und dem gegenwärtigen Bild (30) identifiziert,
und wobei die Komponenten zum Auswählen, Berechnen, Überschreiben und Erzeugen dazu konfiguriert sind, für jeden der mehreren Sektoren einmal zu laufen, und der Vorwärtspatch (20) mehrere sektorspezifische Deltadateien (p₁-pₙ) enthält, die von der Berechungskomponente erstellt sind, und die Rückindexdatei (42) mehrere sektorspezifische Rückindexdateien (r₁-rₙ) enthält, die von der Erzeugekomponente erstellt sind.

22. System nach Anspruch 18 oder 19, wobei das neue binäre Abbild (14) mehrere Sektoren belegt, der Vorwärtspatch (20) mehrere sektorspezifische Deltadateien (p₁-pₙ), jeweils eine zum Erhalten eines der mehreren Sektoren, enthält, die Rückindexdatei (42) mehrere sektorspezifische Rückindexdateien (r₁-rₙ) enthält, wobei der Patchverwalter (92) und das Patcherzeugemodul (26) Folgendes enthalten:
eine Komponente zum Setzen des gegenwärtigen Bild (30) als das alte binäre Abbild (12),
eine Komponente zum Auswählen eines der mehreren Sektoren aus dem neuen binären Abbild (14),
eine Komponente zum Anwenden einer der mehreren sektorspezifischen Deltadateien (pᵢ) auf das gegenwärtige Bild (30) zum Erzeugen des einen der mehreren Sektoren,
eine Komponente zum Überschreiben eines alten Sektors innerhalb des gegenwärtigen Bildes (30) mit dem einen der mehreren Sektoren,
während eine Kopie des alten Sektors zurückbehalten wird, und
eine Komponente zum Erzeugen eines sektorspezifischen Rückpatches (rpᵢ) aus dem gegenwärtigen Bild (30), dem alten Sektor und der sektorspezifischen Rückindexdatei (rᵢ), wobei die sektorspezifische Rückindexdatei (rᵢ) Ähnlichkeitsbereiche zwischen dem alten Sektor und dem gegenwärtigen Bild (30) identifiziert,
und wobei die Komponenten zum Auswählen, Anwenden, Überschreiben und Erzeugen dazu konfiguriert sind, für jeden der mehreren Sektoren einmal zu laufen, und der Rückpatch (44) mehrere der sektorspezifischen Rückpatches (rp₁-rpₙ) enthält.

23. System nach einem der Ansprüche 17 bis 22, wobei das Indexmodul (22) zum Erzeugen der Rückindexdatei (42) einen Indexieroperator mit einem Hashing oder einem Sorting nach Suffixes enthält.

24. System nach einem der Ansprüche 17 bis 23, wobei die elektronische Vorrichtung (80) eine mobile, drahtlose Vorrichtung (80) enthält, das ferner ein Drahtlosnetz (60) enthält, wobei der Server (70) dazu ausgelegt ist, über das Drahtlosnetz den Vorwärtspatch (20) und die Rückindexdatei (42) an die mobile, drahtlose Vorrichtung (80) zu übermitteln.

25. System nach einem der Ansprüche 17 bis 24, wobei die elektronische Vorrichtung (80) einen Permanentspeicher (86) zum Speichern des Rückpatches (44) enthält.

26. Elektronischen Vorrichtung (80) zum Erzeugen eines Rückpatches (44) zum Zurücknehmen eines Vorwärtspatches (20), wobei der Vorwärtspatch (20) aus einem alten binären Abbild (12) ein neues binäres Abbild (14) erzeugt, wobei die elektronische Vorrichtung (80) Folgendes enthält:
einen Vorrichtungsprozessor (84),
ein Kommunikationssubsystem (82) zum Empfangen des Vorwärtspatches (20) und der Rückindexdatei (42) von einem Server (70) über ein oder mehrere Kommunikationsnetze (60),
Vorrichtungsspeicher (86, 90) zum Speichern des Vorwärtspatches (20) und der Rückindexdatei (42),
einem Patchverwalter (92) zum Anwenden des Vorwärtspatches (20) auf das alte binäre Abbild (12) zum Erstellen des neuen binären Abbildes (14),
einem Patcherzeugemodul (26) zum Erzeugen des Rückpatches (44) aus dem neuen binären Abbild (14), dem alten binären Abbild (12) und der Rückindexdatei (42).

27. Elektronische Vorrichtung nach Anspruch 26, wobei der Patchverwalter (92) dazu konfiguriert ist, sektorweise zu laufen, und das Patcherzeugemodul (26) dazu konfiguriert ist, sektorweise zu laufen.

28. Elektronische Vorrichtung nach Anspruch 27, wobei das neue binäre Abbild (14) mehrere Sektoren belegt, der Vorwärtspatch (20) mehrere sektorspezifische Deltadateien (p₁-pₙ), jeweils eine zum Erhalten eines der mehreren Sektoren, enthält, die Rückindexdatei (42) mehrere sektorspezifische Rückindexdateien (r₁-rₙ) enthält und der Patchverwalter (92) und das Patcherzeugemodul (26) Folgendes enthalten:
eine Komponente zum Setzen des gegenwärtigen Bild (30) als das alte binäre Abbild (12),
eine Komponente zum Auswählen eines der mehreren Sektoren aus dem neuen binären Abbild (14),
eine Komponente zum Anwenden einer der mehreren sektorspezifischen Deltadateien (pᵢ) auf das gegenwärtige Bild (30) zum Erzeugen des einen der mehreren Sektoren,
eine Komponente zum Überschreiben eines alten Sektors innerhalb des gegenwärtigen Bildes (30) mit dem einen der mehreren Sektoren,
während eine Kopie des alten Sektors zurückbehalten wird, und
eine Komponente zum Erzeugen eines sektorspezifischen Rückpatches (rpᵢ) aus dem gegenwärtigen Bild (30), dem alten Sektor und einer der sektorspezifischen Rückindexdateien (rᵢ), wobei die sektorspezifische Rückindexdatei (rᵢ) Ähnlichkeitsbereiche zwischen dem alten Sektor und dem gegenwärtigen Bild (30) identifiziert,
und wobei die Komponenten zum Auswählen, Anwenden, Überschreiben und Erzeugen dazu konfiguriert sind, für jeden der mehreren Sektoren einmal zu laufen, und der Rückpatch (44) mehrere der sektorspezifischen Rückpatches (rp₁-rpₙ) enthält.

29. Elektronische Vorrichtung nach einem der Ansprüche 26 bis 28, wobei die elektronische Vorrichtung (80) eine mobile, drahtlose Vorrichtung (80) enthält und das eine oder die mehreren Kommunikationsnetze (60) ein Drahtlosnetz (60) enthalten.

30. Elektronische Vorrichtung nach einem der Ansprüche 26 bis 29, das ferner einem Permanentspeicher (86) zum Speichern des Rückpatches (44) enthält.

31. Maschinenlesbares Medium, das Programmcode verkörpert, der von einem Prozessor einer Rechenvorrichtung ausgeführt werden kann, um zu veranlassen, dass die Rechenvorrichtung das Verfahren nach einem der Ansprüche 1 bis 16 ausführt.

## Revendications

1. Procédé destiné à fournir un fichier d'index inverse (42) pour générer une correction inverse (44) afin d'inverser une correction directe (20) sur un dispositif électronique (80), où la correction directe (20) génère une nouvelle image binaire (14) à partir d'une ancienne image binaire (12), le procédé comprenant les étapes qui consistent à :
générer le fichier d'index inverse (42) au niveau d'un serveur (70), le fichier d'index inverse (42) identifiant des régions de similitude entre l'ancienne image binaire (12) et la nouvelle image binaire (14) à utiliser pour l'obtention d'au moins une partie de l'ancienne image binaire (12) à partir de la nouvelle image binaire (14) ; et
transmettre la correction directe (20) et le fichier d'index inverse (42) du serveur (70) au dispositif électronique (80).

2. Procédé destiné à générer une correction inverse (44), comportant les étapes revendiquées dans la revendication 1, et comprenant en outre le fait :
d'appliquer la correction directe (20) à l'ancienne image binaire (12) pour créer la nouvelle image binaire (14) au niveau du dispositif électronique (80) ; et
de générer la correction inverse (44) à partir de la nouvelle image binaire (14), de l'ancienne image binaire (12), et du fichier d'index inverse (42) au niveau du dispositif électronique (80).

3. Procédé tel que revendiqué dans la revendication 2, dans lequel lesdites étapes qui consistent à générer le fichier d'index inverse (42), à appliquer la correction directe (20) et à générer la correction inverse (44) sont mises en oeuvre secteur par secteur.

4. Procédé tel que revendiqué dans l'une quelconque des revendications précédentes, comprenant en outre une étape qui consiste à générer la correction directe (20).

5. Procédé tel que revendiqué dans la revendication 4, dans lequel la nouvelle image binaire (14) occupe plusieurs secteurs, et où lesdites étapes qui consistent à générer la correction directe (20) et à générer le fichier d'index inverse (42) comprennent le fait :
d'établir une image actuelle (30) comme étant l'ancienne image binaire (12),
de sélectionner l'un de la pluralité de secteurs de la nouvelle image binaire (14),
de calculer un algorithme de différence binaire (16) pour générer un fichier delta (pᵢ) afin d'obtenir ledit un de la pluralité de secteurs à partir de l'image actuelle (30),
d'écraser un ancien secteur dans l'image actuelle (30) avec ledit un de ladite pluralité de secteurs, tout en retenant une copie de l'ancien secteur,
de générer un fichier d'index inverse (rᵢ) spécifique au secteur, où le fichier d'index inverse (rᵢ) spécifique au secteur identifie des régions de similitude entre ledit ancien secteur et ladite image actuelle (30), et
de répéter une fois les étapes qui consistent à sélectionner, calculer, écraser, et générer pour chacun de la pluralité de secteurs,
et où la correction directe (20) comprend plusieurs fichiers delta (p₁-pₙ) créés à partir des étapes de calcul, et où le fichier d'index inverse (42) comprend une pluralité de fichiers d'indexation inverse (r₁-rₙ) spécifiques au secteur créés à partir des étapes de génération.

6. Procédé tel que revendiqué dans la revendication 2 ou la revendication 3, dans lequel la nouvelle image binaire (14) occupe une pluralité de secteurs, la correction directe (20) comprend une pluralité de fichiers delta (p₁-pₙ) spécifiques au secteur, chacun destiné à obtenir l'un de ladite pluralité de secteurs, le fichier d'index inverse (42) comprend une pluralité de fichiers d'indexation inverse (r₁-rₙ) spécifiques au secteur, et où les étapes qui consistent à appliquer la correction directe (20) et à générer la correction inverse (44) comprennent le fait :
d'établir une image actuelle (30) comme étant l'ancienne image binaire (12),
de sélectionner l'un de la pluralité de secteurs à partir de la nouvelle image binaire (14),
d'appliquer l'un de ladite pluralité de fichiers delta (p₁-pₙ) spécifiques au secteur, à l'image actuelle (30) pour générer ledit un de la pluralité de secteurs,
d'écraser un ancien secteur dans l'image actuelle (30) avec ledit un de la pluralité de secteurs tout en retenant une copie de l'ancien secteur,
de générer une correction inverse (rpᵢ) spécifique au secteur à partir de l'image actuelle (30), de l'ancien secteur, et de l'un des fichiers d'indexation inverse (rᵢ) spécifiques au secteur, où ledit fichier d'index (rᵢ) spécifique au secteur identifie des régions de similitude entre ledit ancien secteur et ladite image actuelle (30), et
de répéter une fois les étapes qui consistent à sélectionner, appliquer, écraser, et générer pour chacun de la pluralité de secteurs,
et où la correction inverse (44) comprend une pluralité desdites corrections inverses (rp₁-rpₙ) spécifiques au secteur.

7. Procédé tel que revendiqué dans l'une quelconque des revendications précédentes, dans lequel ladite étape qui consiste à générer le fichier d'index inverse (42) comprend le fait d'effectuer une opération d'indexation, et où ladite opération d'indexation comprend un hachage ou un tri de suffixes.

8. Procédé tel que revendiqué dans l'une quelconque des revendications précédentes, dans lequel ladite étape de transmission comprend le fait de grouper ladite correction directe (20) et ledit fichier d'index inverse (42) ensemble comme produit livrable (96) et de transmettre ledit produit livrable sur un ou plusieurs réseaux de communications (60).

9. Procédé tel que revendiqué dans la revendication 8, dans lequel ledit dispositif électronique (80) comprend un dispositif sans fil mobile (80), et où ledit un ou plusieurs réseaux de communications (60) comprennent un réseau sans fil (60).

10. Procédé tel que revendiqué dans l'une quelconque des revendications précédentes, comprenant en outre une étape qui consiste à stocker ladite correction inverse (44) dans une mémoire non volatile (86) sur ledit dispositif (80).

11. Procédé au niveau d'un dispositif électronique (80) destiné à générer une correction inverse (44) pour inverser une correction directe (20), où la correction directe (20) génère une nouvelle image binaire (14) à partir d'une ancienne image binaire (12), le procédé comprenant les étapes qui consistent à :
recevoir la correction directe (20) et un fichier d'index inverse (42) depuis un serveur (70), le fichier d'index inverse (42) identifiant des régions de similitude entre l'ancienne image binaire (12) et la nouvelle image binaire (14) à utiliser pour l'obtention d'au moins une partie de l'ancienne image binaire (12) à partir de la nouvelle image binaire (14);
appliquer la correction directe (20) à l'ancienne image binaire (12) pour créer la nouvelle image binaire (14) ; et
générer la correction inverse (44) à partir de la nouvelle image binaire, de l'ancienne image binaire (12) et du fichier d'index inverse (42).

12. Procédé tel que revendiqué dans la revendication 11, dans lequel lesdites étapes qui consistent à appliquer la correction directe (20) et à générer la correction inverse (44) sont mises en oeuvre secteur par secteur.

13. Procédé tel que revendiqué dans la revendication 12, dans lequel la nouvelle image binaire (14) occupe une pluralité de secteurs, la correction directe (20) comprend une pluralité de fichiers delta (p₁-pₙ) spécifiques au secteur chacun pour obtenir l'un de ladite pluralité de secteurs, le fichier d'index inverse (42) comprend une pluralité de fichiers d'indexation inverse (r₁-rₙ) spécifiques au secteur, et où les étapes qui consistent à appliquer la correction directe (20) et à générer la correction inverse (44) comprennent le fait :
d'établir une image actuelle (30) comme étant l'ancienne image binaire (12),
de sélectionner l'un de la pluralité de secteurs à partir de la nouvelle image binaire (14),
d'appliquer l'un de ladite pluralité de fichiers delta (p₁-pₙ) spécifiques au secteur à l'image actuelle (30) pour générer ledit un de la pluralité de secteurs,
d'écraser un ancien secteur dans l'image actuelle (30) avec ledit un de la pluralité de secteurs tout en retenant une copie de l'ancien secteur,
de générer une correction inverse (rpᵢ) spécifique au secteur à partir de l'image actuelle (30), de l'ancien secteur et de l'un des fichiers d'indexation inverse (rᵢ) spécifiques au secteur, où ledit fichier d'index inverse (rᵢ) spécifique au secteur identifie des régions de similitude entre ledit ancien secteur et ladite image actuelle (30), et
de répéter une fois les étapes qui consistent à sélectionner, appliquer, écraser, et générer pour chacun de la pluralité de secteurs,
et où la correction inverse (44) comprend une pluralité desdites corrections inverses (rp₁-rpₙ) spécifiques au secteur.

14. Procédé tel que revendiqué dans l'une quelconque des revendications 11 à 13, dans lequel ladite étape de réception comprend le fait de recevoir la correction directe (20) et le fichier d'index inverse (42) sur un réseau de communications (60) et à stocker la correction directe (20) et le fichier d'index inverse (42) dans une mémoire sur le dispositif électronique (80).

15. Procédé tel que revendiqué dans la revendication 14, dans lequel ledit dispositif électronique (80) comprend un dispositif sans fil mobile (80), et où ledit réseau de communications (60) comprend un réseau sans fil (60).

16. Procédé tel que revendiqué dans l'une quelconque des revendications 11 à 15, comprenant en outre une étape de stockage de ladite correction inverse (44) dans une mémoire non volatile (86) sur ledit dispositif électronique (80).

17. Système destiné à fournir un fichier d'index inverse (42) afin de générer une correction inverse (44) pour inverser une correction directe (20), où la correction directe (20) génère une nouvelle image binaire (14) à partir d'une ancienne image binaire (12), le système comprenant :
un serveur (70) ayant un processeur (50) et une mémoire pour stocker la nouvelle image binaire (14) et l'ancienne image binaire (12), et pour stocker la correction directe (20), et ayant un module d'indexation (22) pouvant être exécuté par le processeur (50) afin de générer un fichier d'index inverse (42), le fichier d'index inverse (42) identifiant des régions de similitude entre l'ancienne image binaire (12) et la nouvelle image binaire (14) à utiliser pour l'obtention d'au moins une partie de l'ancienne image binaire (12) à partir de la nouvelle image binaire (14), le serveur (70) comprenant une interface de communications (94) pour transmettre la correction directe (20) et le fichier d'index inverse (42) du serveur (70) à un dispositif électronique (80).

18. Système tel que revendiqué dans la revendication 17, comprenant en outre le dispositif électronique (80), dans lequel ledit dispositif électronique (80) a un processeur de dispositif (84) et une mémoire de dispositif (86, 90) pour stocker la correction directe (20) et le fichier d'index inverse (42) reçus du serveur (70) par le biais d'un ou de plusieurs réseaux de communications (60), le dispositif électronique (80) comprenant un gestionnaire de correction (92) pour appliquer la correction directe (20) à l'ancienne image binaire (12) afin de créer la nouvelle image binaire (14), et comprenant un module de génération de correction (26) pour générer la correction inverse (44) à partir de la nouvelle image binaire (14), de l'ancienne image binaire (12), et du fichier d'index inverse (42).

19. Système tel que revendiqué dans la revendication 18, dans lequel ledit module d'indexation (22) est configuré pour générer ledit fichier d'index inverse (42) secteur par secteur, où ledit gestionnaire de correction (92) est configuré pour appliquer la correction directe (20) secteur par secteur, et où ledit module de génération de correction (26) est configuré pour générer la correction inverse (44) secteur par secteur.

20. Système tel que revendiqué dans l'une quelconque des revendications 17 à 19, dans lequel ledit serveur (70) comprend en outre un algorithme de différence binaire (16) pour générer ladite correction directe (20).

21. Système tel que revendiqué dans la revendication 20, dans lequel la nouvelle image binaire (14) occupe plusieurs secteurs, et dans lequel ledit algorithme de différence binaire (16) et ledit module d'indexation (22) comprennent :
un composant destiné à établir une image actuelle (30) comme étant l'ancienne image binaire (12),
un composant destiné à sélectionner l'un de la pluralité de secteurs à partir de la nouvelle image binaire (14),
un composant destiné à calculer ledit algorithme de différence binaire (16) pour générer un fichier delta (pᵢ) afin d'obtenir ledit un de la pluralité de secteurs à partir de l'image actuelle (30),
un composant destiné à écraser un ancien secteur dans l'image actuelle (30) avec ledit un de la pluralité de secteurs, tout en retenant une copie de l'ancien secteur, et
un composant générant un fichier d'index inverse (rᵢ) spécifique au secteur, où le fichier d'index inverse (rᵢ) spécifique au secteur identifie des régions de similitude entre ledit ancien secteur et ladite image actuelle (30),
et où lesdits composants destinés à sélectionner, calculer, écraser, et générer sont configurés pour opérer une fois pour chacun de la pluralité de secteurs, et où la correction directe (20) comprend une pluralité de fichiers delta (p₁-pₙ) créés par le composant de calcul, et où le fichier d'index inverse (42) comprend une pluralité de fichiers d'indexation inverse (r₁-rₙ) spécifiques au secteur créés par le composant de génération.

22. Système tel que revendiqué dans la revendication 18 ou la revendication 19, dans lequel la nouvelle image binaire (14) occupe une pluralité de secteurs, la correction directe (20) comprend une pluralité de fichiers delta (p₁-pₙ) spécifiques au secteur pour obtenir chacun l'un de ladite pluralité de secteurs, le fichier d'index inverse (42) comprend une pluralité de fichiers d'indexation inverse (r₁-rₙ) spécifiques au secteur, et où le gestionnaire de correction (92) et le module de génération de correction (26) comprennent :
un composant pour établir une image actuelle (30) comme étant l'ancienne image binaire (12),
un composant pour sélectionner l'un de la pluralité de secteurs à partir de la nouvelle image binaire (14),
un composant pour appliquer l'un de ladite pluralité de fichiers delta (pᵢ) spécifiques au secteur à l'image actuelle (30) afin de générer ledit un de ladite pluralité de secteurs,
un composant pour écraser un ancien secteur dans l'image actuelle (30) avec ledit un de la pluralité de secteurs, tout en retenant une copie de l'ancien secteur, et
un composant destiné à générer une correction inverse (rpᵢ) spécifique au secteur à partir de l'image actuelle (30), de l'ancien secteur et de l'un des fichiers d'indexation inverse (rᵢ) spécifiques au secteur, où ledit fichier d'index inverse (rᵢ) spécifique au secteur identifie des régions de similitude entre ledit ancien secteur et ladite image actuelle (30),
et où lesdits composants destinés à sélectionner, appliquer, écraser, et générer sont configurés pour opérer une fois pour chacun de la pluralité de secteurs, et où la correction inverse (44) comprend une pluralité desdites corrections inverses (rp₁-rpₙ) spécifiques au secteur.

23. Système tel que revendiqué dans l'une quelconque des revendications 17 à 22, dans lequel ledit module d'indexation (22) destiné à générer le fichier d'index inverse (42) comprend un opérateur d'indexation, qui comprend un hachage ou un tri de suffixes.

24. Système tel que revendiqué dans l'une quelconque des revendications 17 à 23, dans lequel ledit dispositif électronique (80) comprend un dispositif sans fil mobile (80), et comprenant en outre un réseau sans fil (60) sur lequel ledit serveur (70) est agencé pour transmettre la correction directe (20) et le fichier d'index inverse (42) au dispositif sans fil mobile (80).

25. Système tel que revendiqué dans l'une quelconque des revendications 17 à 24, dans lequel ledit dispositif électronique (80) comprend une mémoire non volatile (86) pour stocker ladite correction inverse (44).

26. Dispositif électronique (80) destiné à générer une correction inverse (44) pour inverser une correction directe (20), où la correction directe (20) génère une nouvelle image binaire (14) à partir d'une ancienne image binaire (12), le dispositif électronique (80) comprenant :
un processeur de dispositif (84) ;
un sous-système de communications (82) destiné à recevoir la correction directe (20) et le fichier d'index inverse (42) depuis un serveur (70) par le biais d'un ou de plusieurs réseaux de communications (60) ;
une mémoire de dispositif (86, 90) pour stocker la correction directe (20) et le fichier d'index inverse (42) ;
un gestionnaire de correction (92) pour appliquer la correction directe (20) à l'ancienne image binaire (12) pour créer la nouvelle image binaire (14) ;
un module de génération de correction (26) pour générer la correction inverse (44) à partir de la nouvelle image binaire (14), de l'ancienne image binaire (12) et du fichier d'index inverse (42).

27. Dispositif électronique tel que revendiqué dans la revendication 26, dans lequel ledit gestionnaire de correction (92) est configuré pour opérer secteur par secteur, et où ledit module de génération de correction (26) est configuré pour opérer secteur par secteur.

28. Dispositif électronique tel que revendiqué dans la revendication 27, dans lequel la nouvelle image binaire (14) occupe une pluralité de secteurs, la correction directe (20) comprend une pluralité de fichiers delta (p₁-pₙ) spécifiques au secteur pour obtenir chacun l'un de ladite pluralité de secteurs, le fichier d'index inverse (42) comprend une pluralité de fichiers d'indexation inverse (r₁-rₙ) spécifiques au secteur, et où le gestionnaire de correction (92) et le module de génération de correction (26) comprennent :
un composant pour établir une image actuelle (30) comme étant l'ancienne image binaire (12),
un composant pour sélectionner l'un de la pluralité de secteurs à partir de la nouvelle image binaire (14),
un composant destiné à appliquer l'un de ladite pluralité fichiers delta (pᵢ) spécifiques au secteur à l'image actuelle (30) pour générer ledit un de la pluralité de secteurs,
un composant destiné à écraser un ancien secteur dans l'image actuelle (30) avec ledit un de la pluralité de secteurs, tout en retenant une copie de l'ancien secteur, et
un composant destiné à générer une correction inverse (rpᵢ) spécifique au secteur à partir de l'image actuelle (30), l'ancien secteur, et l'un des fichiers d'indexation inverse (rᵢ) spécifiques au secteur, où ledit fichier d'index inverse (rᵢ) spécifique au secteur identifie des régions de similitude entre ledit ancien secteur et ladite image actuelle (30),
et où lesdits composants destinés à sélectionner, appliquer, écraser, et générer sont configurés pour opérer une fois pour chacun de la pluralité de secteurs, et où la correction inverse (44) comprend une pluralité desdites corrections inverses (rp₁-rpₙ) spécifiques au secteur.

29. Dispositif électronique tel que revendiqué dans l'une quelconque des revendications 26 à 28, dans lequel ledit dispositif électronique (80) comprend un dispositif sans fil mobile (80), et où ledit un ou plusieurs des réseaux de communications (60) comprennent un réseau sans fil (60).

30. Dispositif électronique tel que revendiqué dans l'une quelconque des revendications 26 à 29, comprenant en outre une mémoire non volatile (86) pour stocker ladite correction inverse (44).

31. Support lisible par machine comprenant un code de programme pouvant être exécuté par un processeur d'un dispositif informatique pour amener ledit dispositif informatique à mettre en oeuvre le procédé de l'une quelconque des revendications 1 à 16.
